# EUROPEAN PATENT APPLICATION

(11) **EP 4 422 103 A1**
(43) Date of publication of application: **28.08.2024**
(21) Application number: 22892170.6
(22) Date of filing: 15.11.2022
(51) Int. Cl.: H04L 1/16

(54) **DATA TRANSMISSION METHOD AND APPARATUS, AND COMMUNICATION DEVICE AND STORAGE MEDIUM**

(30) Priority: 15.11.2021 CN 202111350583
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN); XU, Xiaodong, Beijing 100053 (CN)
(74) Representative: J A Kemp LLP
(86) International application number: PCT/CN2022/132011
(87) International publication number: WO 2023/083378

(57) **Abstract**

The embodiments of the present disclosure disclose a data transmission method and apparatus, and a communication device and a storage medium. The method comprises: when satisfying a first condition, a packet data convergence protocol (PDCP) entity of a terminal sending a PDCP status report, wherein the first condition comprises at least one of the following: the PDCP entity detecting that a first protocol data unit (PDU) is lost; the PDCP entity detecting that first PDUs, the number of which is greater than or equal to a configured number, are lost; the PDCP entity undergoing a change from a point-to-point sending and/or receiving mode to a point-to-multipoint sending and/or receiving mode; the PDCP entity of the terminal undergoing a change of at least one of addition, removal and reconfiguration; an adaptation layer entity, which is connected to the PDCP entity of the terminal, undergoing a change of at least one of addition, removal and reconfiguration; and a radio link control (RLC) entity, which is connected to the PDCP entity of the terminal, undergoing a change of at least one of addition, removal and reconfiguration.

## Description

### CROSS-REFERENCE TO RELATED APPLICATIONS

This application is filed based on and claims priority to Chinese Patent application No. 202111350583.7 filed on November 15, 2021, the contents of which are hereby incorporated by reference in its entirety.

### TECHNICAL FIELD

The disclosure relates to the technical field of communications, and in particular to a data transmission method and apparatus, a communication device, and a storage medium.

### BACKGROUND

At present, during data transmission, uplink (UL) power of a single terminal is limited, resulting in that data transmission rate is limited, bandwidth usage is limited, reliability cannot be guaranteed, and data transmission does not support fast and effective usage of an Automatic Repeat request (ARQ)-based retransmission technology of an Acknowledged Mode (AM) mode of a Packet Data Convergence Protocol (PDCP), which is especially significant at an edge of a cell. At present, triggering of ARQ retransmission is not timely made, which has relatively large limitation, and cannot guarantee transmission performance requirements of services requiring high reliability, low delay and large bandwidth, such as Vehicle to Everything (V2X), Augmented Reality (AR), Virtual Reality (VR), multicast service, etc.

### SUMMARY

Embodiments of the disclosure provide a data transmission method and apparatus, a communication device, and a storage medium.

Technical solutions of the embodiments of the disclosure are implemented in manners as follows.

According to a first aspect, an embodiment of the disclosure provides a data transmission method, the method includes the following operations.

A PDCP entity of a terminal sends a PDCP status report when a first condition is met, the first condition includes at least one of:
the PDCP entity detecting that a first Protocol Data Unit (PDU) is missing;
the PDCP entity detecting that a number of missing first PDUs is greater than or equal to a configured number;
the PDCP entity undergoing modification from a Point To Point (PTP) sending and/or receiving mode to a Point To Multipoint (PTM) sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, Quality of Service (QoS) flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery.

The PDCP status report is configured to trigger a first network node to retransmit data.

In some optional embodiments of the disclosure, the operation of sending, by the PDCP entity of the terminal, the PDCP status report when the first condition is met, may include the following operations. The PDCP entity sends the PDCP status report when the first condition is met, when a discard timer or a reorganization timer expires. Or, the PDCP entity sends the PDCP status report at a configured period, when the first condition is met.

In some optional embodiments of the disclosure, the method may further include the following operations. The PDCP entity remains a starting position of a receiving window of a receiving buffer unchanged.

In some optional embodiments of the disclosure, the method may further include the following operations. The terminal receives first configuration information sent by the first network node, the first configuration information includes indication information of at least one of:
sending the PDCP status report when the PDCP entity detects that the first PDU is missing;
sending the PDCP status report when the PDCP entity detects that the number of missing first PDUs is greater than or equal to the configured number;
sending the PDCP status report when the PDCP entity changes from a PTP sending and/or receiving mode to a PTM sending and/or receiving mode;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC Acknowledged Mode (AM) mode and/or an RLC Unacknowledged Mode (UM) mode.

In some optional embodiments of the disclosure, the first configuration information may further include indication information of at least one of:
whether the PDCP status report to be sent carries information indicating a Hyper Frame Number (HFN) corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and a serial number (SN) corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments of the disclosure, the method may further include the following operations. In case that both the PDCP entity and the RLC entity of the terminal have an ARQ function, the terminal receives second configuration information sent by the first network node, and activates or deactivates the ARQ function of the PDCP entity or the RLC entity based on the second configuration information.

In some optional embodiments of the disclosure, the method may further include the following operations. The terminal receives third configuration information sent by the first network node, the third configuration information includes a priority of a packet discard timer, a priority of a packet retransmission timer, and a priority of a packet reorganization timer. The terminal performs an operation mechanism corresponding to a timer with a highest priority.

In some optional embodiments of the disclosure, the method may further include the following operations. The terminal determines a timer with a shortest timing duration from a packet discard timer, a packet retransmission timer and a packet reorganization timer, based on an operation mechanism corresponding to the timer with the shortest timing duration.

According to a second aspect, an embodiment of the disclosure further provides a data transmission method, the method includes the following operations.

A first network node receives a PDCP status report sent by a terminal, and retransmits data based on the PDCP status report. The PDCP status report is sent when a first condition is met, and the first condition includes at least one of:
a PDCP entity of the terminal detecting that a first PDU is missing;
the PDCP entity of the terminal detecting that a number of missing first PDUs is greater than or equal to a configured number;
the PDCP entity of the terminal undergoing modification from a PTP sending and/or receiving mode to a PTM sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

In some optional embodiments of the disclosure, the method may further include the following operations. The first network node sends first configuration information to the terminal, the first configuration information includes indication information of at least one of:
the PDCP entity of the terminal detecting that the first PDU is missing, and sending the PDCP status report;
the PDCP entity of the terminal detecting that the number of missing first PDUs is greater than or equal to the configured number, and sending the PDCP status report;
the PDCP entity of the terminal undergoing modification from the PTP sending and/or receiving mode to the PTM sending and/or receiving mode, and sending the PDCP status report;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC AM mode and/or an RLC UM mode.

In some optional embodiments of the disclosure, the first configuration information may further include indication information of at least one of:
whether the PDCP status report to be sent carries information indicating an HFN corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and an SN corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments of the disclosure, the method may further include the following operations. The first network node sends second configuration information to the terminal, the second configuration information is configured to activate or deactivate an ARQ function of the PDCP entity or the RLC entity of the terminal, and both the PDCP entity and the RLC entity of the terminal have the ARQ function.

In some optional embodiments of the disclosure, the method may further include the following operations. The first network node sends third configuration information to the terminal, the third configuration information includes a priority of a packet discard timer, a priority of a packet retransmission timer, and a priority of a packet reorganization timer.

According to a third aspect, an embodiment of the disclosure further provides a data transmission method, the method includes the following operations.

A first terminal sends and/or receives data through m terminals, m is a positive integer equal to or greater than 1.

In some optional embodiments of the disclosure, the method may further include the following operations. The first terminal receives fourth configuration information sent by a core network, the fourth configuration information includes at least one of:

PDU session configuration information; Internet Protocol (IP) address; Temporary Mobile Subscriber Identity (TMSI) identifier (ID); General Packet Radio Service (GPRS) Tunnel Protocol-User Plane (GTP-U) tunnel configuration information; registration area; or security parameters.

In some optional embodiments of the disclosure, the fourth configuration information may be applied to data sending and/or receiving of at least one of the m terminals.

In some optional embodiments of the disclosure, the data sent and/or received by the first terminal through the m terminals and data sent and/or received by the first terminal may include at least one of the following situations:
the data sent and/or received by the first terminal through the m terminals and the data sent and/or received by the first terminal are same data of a same service;
the data sent and/or received by the first terminal through the m terminals and the data sent and/or received by the first terminal are different data of a same service; or
the data sent and/or received by the first terminal through the m terminals and the data sent and/or received by the first terminal are data of different services.

In some optional embodiments of the disclosure, the method may further include the following operations. The first terminal receives fifth configuration information sent by a first network node, the fifth configuration information is configured to configure data aggregation and/or splitting among multiple terminals.

The fifth configuration information includes at least one of the following information:
at least one of Service Data Adaptation Protocol (SDAP) configuration information, new logic layer configuration information, PDCP configuration information, RLC configuration information, Medium Access Control (MAC) configuration information or physical layer (PHY) configuration information;
a direction in which the data aggregation and/or splitting is performed;
security information of a service corresponding to the data;
one or more Hybrid Automatic Repeat reQuest (HARQ) process numbers configured for the first terminal and each of the m terminals respectively;
one or more common Configured Grants (CGs) and/or Semi-Persistent Scheduling (SPSs) configured for the first terminal and each of the m terminals respectively;
one or more CGs and/or SPSs configured for the first terminal and each of the m terminals respectively;
one or more common Discontinuous Reception (DRX) configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, Bandwidth Parts (BWPs) or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, the method may further include the following operations. The first terminal forwards all or part of the fifth configuration information to at least one of the m terminals.

In some optional embodiments of the disclosure, the operation of sending and/or receiving, by the first terminal, data through the m terminals may include the following operations.

The first terminal forwards data to at least one of the m terminals according to the fifth configuration information, the data is determined according to a position of a common layer.

In case that the position of the common layer is a new logic layer above an SDAP or a PDCP, the data is a PDCP Service Data Unit (SDU).

In case that the position of the common layer is a PDCP, the data is a PDCP PDU.

In case that the position of the common layer is RLC, the data is an RLC PDU.

In case that the position of the common layer is a MAC layer, the data is a MAC PDU.

In case that the position of the common layer is a PHY, the data is a Physical Uplink Shared Channel (PUSCH) transmission.

In some optional embodiments of the disclosure, the operation of sending and/or receiving, by the first terminal, data through the m terminals may include the following operations.

The first terminal sends data to at least one of the m terminals, and/or receives data from the at least one of the m terminals, according to aggregation and/or splitting conditions sent by a first network node or an Artificial Intelligence (AI) control body.

Or, the first terminal autonomously selects to send data to at least one of the m terminals, and/or receive data from the at least one of the m terminals.

The aggregation and/or splitting conditions include at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

In some optional embodiments of the disclosure, the method may further include the following operations. The first terminal sends first indication information to the first network node, the first indication information is configured to indicate that the first terminal starts sending data to at least one of the m terminals, and/or receiving data from the at least one of the m terminals.

The first terminal sends second indication information to at least one of the m terminals, the second indication information is configured to indicate that the first terminal starts sending data to the at least one of the m terminals, and/or receiving data from the at least one of the m terminals.

In some optional embodiments of the disclosure, the method may further include the following operations. The first terminal sends first request information to a first network node, the first request information is used by the first terminal to request to send data to at least one of the m terminals, and/or receive data from the at least one of the m terminals.

In some optional embodiments of the disclosure, the method may further include the following operations. First information is exchanged between the first terminal and at least one of the m terminals with a data aggregation and/or splitting relationship before the data aggregation and/or splitting is established, the first information includes at least one of the following information: transmission power capability; Radio Frequency (RF) chain capability; processing capability; supported bandwidth; supported frequency combination; information of transmission delay and/or jitter among the m terminals; or information of a service supporting aggregation and/or splitting among the m terminals.

In some optional embodiments of the disclosure, the method may further include the following operations. The first terminal sends second information to the first network node and/or a core network, the second information includes information of the at least one of the m terminals with the data aggregation and/or splitting relationship, the information of the at least one terminal includes at least one of the following information:
ID of the terminal; or
the first information.

In some optional embodiments of the disclosure, the method may further include the following operations. The first terminal receives a decomposition result of QoS decomposition or 5G service quality identifier (5QI) parameter decomposition performed by a first network node on a service or a QoS flow on two or more air interfaces.

According to a fourth aspect, an embodiment of the disclosure further provides a data transmission method, the method includes the following operations.

A second terminal receives data from a first terminal, and/or sends data to the first terminal, the second terminal is one of m terminals, the first terminal sends and/or receives data through the m terminals, and m is a positive integer equal to or greater than 1.

In some optional embodiments of the disclosure, the method may further include the following operations. The second terminal receives fifth configuration information sent by a first network node or the first terminal, the fifth configuration information is configured to configure data aggregation and/or splitting among multiple terminals.

The fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, data transmitted between the second terminal and the first terminal and data sent and/or received by the first terminal may include at least one of the following situations:
the data transmitted between the second terminal and the first terminal and the data sent and/or received by the first terminal are same data of a same service;
the data transmitted between the second terminal and the first terminal and the data sent and/or received by the first terminal are different data of a same service; or
the data transmitted between the second terminal and the first terminal and the data sent and/or received by the first terminal are data of different services.

In some optional embodiments of the disclosure, data transmitted between the second terminal and the first terminal may be determined according to a position of a common layer.

In case that the position of the common layer is a new logic layer above an SDAP or a PDCP, the data is a PDCP SDU.

In case that the position of the common layer is a PDCP, the data is a PDCP PDU.

In case that the position of the common layer is RLC, the data is an RLC PDU.

In case that the position of the common layer is MAC, the data is a MAC PDU.

In case that the position of the common layer is a PHY, the data is a PUSCH transmission.

In some optional embodiments of the disclosure, the method may further include the following operations. The second terminal receives second indication information sent by the first terminal, the second indication information is configured to indicate that the first terminal starts sending data to the second terminal, and/or receiving data from at least one of the m terminals.

According to a fifth aspect, an embodiment of the disclosure further provides a data transmission method, the method includes the following operations.

A first network node sends fifth configuration information or aggregation and/or splitting conditions to a first terminal and/or a second terminal, the fifth configuration information and/or the aggregation and/or splitting conditions are used by the first terminal to forward data to at least one of m terminals, m is a positive integer equal to or greater than 1, and the second terminal is one of the m terminals.

In some optional embodiments of the disclosure, the fifth configuration information may be further configured to configure data aggregation and/or splitting among multiple terminals, the fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, the aggregation and/or splitting conditions may include at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

In some optional embodiments of the disclosure, the method may further include the following operations. The first network node receives first indication information sent by the first terminal, the first indication information is configured to indicate that the first terminal starts forwarding data to the at least one of the m terminals, and/or the first terminal receives data from the at least one of the m terminals.

In some optional embodiments of the disclosure, the method may further include the following operations. The first network node receives first request information sent by the first terminal, the first request information is used by the first terminal to request to send data to the at least one of the m terminals, and/or used by the first terminal to request to receive data from the at least one of the m terminals.

In some optional embodiments of the disclosure, the method may further include the following operations. The first network node receives second information sent by the first terminal, the second information includes information of at least one of the m terminals with a data aggregation and/or splitting relationship, the information of the at least one terminal includes at least one of the following information:
ID of the terminal; or
the first information.

In some optional embodiments of the disclosure, the method may further include the following operations. The first network node performs QoS decomposition or 5QI parameter decomposition on a service or a QoS flow on two or more air interfaces, to obtain a decomposition result and send the decomposition result to the first terminal.

According to a sixth aspect, an embodiment of the disclosure further provides a data transmission apparatus, the apparatus is applied to a terminal, and the apparatus includes a first communication unit. The first communication unit is configured to send a PDCP status report by a PDCP entity of the terminal when a first condition is met, the first condition includes at least one of:
the PDCP entity detecting that a first PDU is missing;
the PDCP entity detecting that a number of missing first PDUs is greater than or equal to a configured number;
the PDCP entity undergoing modification from a PTP sending and/or receiving mode to a PTM sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

The PDCP status report is configured to trigger a first network node to retransmit data.

According to a seventh aspect, an embodiment of the disclosure further provides a data transmission apparatus, the apparatus is applied to a first network node, and the apparatus includes a second communication unit. The second communication unit is configured to receive a PDCP status report sent by a terminal, and retransmit data based on the PDCP status report.

The PDCP status report is sent when a first condition is met, and the first condition includes at least one of:
a PDCP entity of the terminal detecting that a first PDU is missing;
the PDCP entity of the terminal detecting that a number of missing first PDUs is greater than or equal to a configured number;
the PDCP entity of the terminal undergoing modification from a PTP sending and/or receiving mode to a PTM sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

According to an eighth aspect, an embodiment of the disclosure further provides a data transmission apparatus, the apparatus is applied to a first terminal, and the apparatus includes a third communication unit. The third communication unit is configured to data sending and/or receiving through m terminals, m is a positive integer equal to or greater than 1.

According to a ninth aspect, an embodiment of the disclosure further provides a data transmission apparatus, the apparatus is applied to a second terminal, and the apparatus includes a fourth communication unit. The fourth communication unit is configured to receive data from a first terminal, and/or send data to the first terminal, the second terminal is one of m terminals, the first terminal sends and/or receives data through the m terminals.

According to a tenth aspect, an embodiment of the disclosure further provides a data transmission apparatus, the apparatus is applied to a first network node, and the apparatus includes a fifth communication unit. The fifth communication unit is configured to send fifth configuration information or aggregation and/or splitting conditions to a first terminal and/or a second terminal, the fifth configuration information and/or the aggregation and/or splitting conditions are used by the first terminal to forward data to at least one of m terminals, m is a positive integer equal to or greater than 1, and the second terminal is one of the m terminals.

According to an eleventh aspect, an embodiment of the disclosure further provides a computer-readable storage medium, having stored thereon a computer program, the program implements operations of the method described in any one of the foregoing aspects of the embodiments of the disclosure when the program is executed by a processor.

According to a twelfth aspect, an embodiment of the disclosure further provides a communication device, the communication device includes a memory, a processor, and a computer program stored on the memory and executable on the processor, the processor implements operations of the method described in any one of the foregoing aspects of the embodiments of the disclosure when the processor executes the program.

According to the data transmission method and apparatus, the communication device and the storage medium provided in the embodiments of the disclosure, the method includes the following operations. A PDCP entity of a terminal sends a PDCP status report when a first condition is met, the first condition includes at least one of: the PDCP entity detecting that a first PDU is missing; the PDCP entity detecting that a number of missing first PDUs is greater than or equal to a configured number; the PDCP entity undergoing modification from a PTP sending and/or receiving mode to a PTM sending and/or receiving mode; the PDCP entity of the terminal undergoing modification of at least one of addition, removal or reconfiguration; an adaptation layer entity connected to the PDCP entity of the terminal, undergoing modification of at least one of addition, removal or reconfiguration; an RLC entity connected to the PDCP entity of the terminal, undergoing modification of at least one of addition, removal or reconfiguration; security configuration of the PDCP entity of the terminal undergoing modification; the terminal establishing or removing connections for sending and/or receiving a same service, QoS flow, stream or service data flow, or PDU session with other terminals; the terminal re-entering a coverage area from a non-coverage area; a radio condition of a service cell measured by the terminal being equal to or greater than a configured threshold; or the terminal completing RLF recovery. The PDCP status report is configured to trigger a first network node to retransmit data. By using the technical solutions of the embodiments of the disclosure, the PDCP entity of the terminal sends the PDCP status report when the above first condition is met, to trigger the first network node to retransmit data, thereby achieving timely triggering of ARQ retransmission, so that transmission performance requirements of high reliability, low delay and large bandwidth can be guaranteed; and problems of data transmission such as limited data sending rate, limited bandwidth usage, unguaranteed reliability or the like are further overcome with the help of means of sending a service by multiple terminals jointly, sending data through other terminals, etc.

### BRIEF DESCRIPTION OF THE DRAWINGS

FIG. 1 is a first schematic flowchart of a data transmission method according to an embodiment of the disclosure.
FIG. 2 is a second schematic flowchart of a data transmission method according to an embodiment of the disclosure.
FIG. 3 is a first schematic diagram of a structure of a data transmission apparatus according to an embodiment of the disclosure.
FIG. 4 is a second schematic diagram of a structure of a data transmission apparatus according to an embodiment of the disclosure.
FIG. 5 is a third schematic flowchart of a data transmission method according to an embodiment of the disclosure.
FIG. 6 is a fourth schematic flowchart of a data transmission method according to an embodiment of the disclosure.
FIG. 7 is a fifth schematic flowchart of a data transmission method according to an embodiment of the disclosure.
FIG. 8A and FIG. 8B are schematic diagrams of service aggregation and/or splitting between multiple terminals in a data transmission method according to an embodiment of the disclosure.
FIG. 9 is a schematic diagram of a protocol stack for service aggregation and/or splitting between multiple terminals in a data transmission method according to an embodiment of the disclosure.
FIG. 10 is a schematic diagram of interaction processes of a data transmission method according to an embodiment of the disclosure.
FIG. 11 is a third schematic diagram of a structure of a data transmission apparatus according to an embodiment of the disclosure.
FIG. 12 is a fourth schematic diagram of a structure of a data transmission apparatus according to an embodiment of the disclosure.
FIG. 13 is a fifth schematic diagram of a structure of a data transmission apparatus according to an embodiment of the disclosure.
FIG. 14 is a schematic diagram of hardware a structure of a communication device according to an embodiment of the disclosure.

### DETAILED DESCRIPTION

The disclosure will be further described in detail below in combination with the drawings and specific embodiments.

The technical solutions of the embodiments of the disclosure may be applied to various communication systems, such as but is not limited to a Long Time Evolution (LTE)/LTE-Advanced (LTE-A) system, and may also be used in other wireless communications systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA) and other systems. Terms "system" and "network" in the embodiments of the disclosure are often used interchangeably, and the described technologies may be used in the above-mentioned system and radio technologies, and may also be used in other systems and radio technologies. However, the following descriptions describe a New Radio (NR) system for the purpose of examples, and uses NR terms in most of the following descriptions, although these techniques may also be applied to applications other than NR system application, such as a 6th Generation (6G) communication system, "data" in the embodiments of the disclosure may be interpreted as at least one of "data packet", "transmission", "data unit", "Physical Uplink Share Channel (PUSCH) transmission", "Physical Downlink Share Channel (PDSCH) transmission", or "Transport Block (TB)", etc.

"service" in the embodiments of the disclosure may represent at least one of the following concepts: service, Protocol Data Unit (PDU) session, Quality of Service (QoS) flow, stream or service data flow, radio bearer, logical channel, etc.

Data in the embodiments of the disclosure refers to data or traffic flow corresponding to a service.

Exemplarily, a communication system to which the embodiments of the disclosure are applied may include a first network node and a terminal device (which may also be referred to as a terminal, a communication terminal, etc.); and the first network node may be a device communicating with the terminal device. The first network node may provide communication coverage within a certain area, and may communicate with terminals located within the area. Optionally, the first network node may be any one of a base station, a relay, an Integrated Access Backhaul (IAB), a Transmission and Reception Point (TRP), a Centralized Unit (CU) and a Distributed Unit (DU) in various communication systems; for example, an Evolutional Node B (eNB) in an LTE system, and for another example, a base station (gNB) in a 5G system or an NR system.

It should be understood that a device with a communication function in the network/system in the embodiments of the disclosure may be referred to as a communication device. The communication device may include a first network node and a terminal with communication functions respectively, and the first network node and the terminal device may be the above specific devices, which are not elaborated here; the communication device may also include other devices in the communication system, such as a network controller, a mobility management entity or other network entities, which are not limited in the embodiments of the disclosure.

It should be understood that a term "and/or" in the embodiments of the disclosure is only an association relationship describing associated objects, and represents that there may be three relationships. For example, A and/or B may represent three situations, i.e., A exists alone, A and B exist simultaneously, and B exists alone. Furthermore, a character "/" in the context usually represents that anterior and posterior associated objects are in an "or" relationship.

Terms "first", "second" or the like in the description and claims of the disclosure are intended to distinguish similar objects, and are not necessarily intended to describe a specific order or sequence. It should be understood that data so used are interchangeable in appropriate situations, such that for example the embodiments of the disclosure described here, may be practiced in sequences other than those illustrated or described here. Furthermore, terms "include", "have" as well as any variant thereof, are intended to cover a non-exclusive inclusion, for example, a process, method, system, product or device including a series of operations or units is not necessarily limited to those operations or units listed explicitly, instead, may include other operations or units which are not listed explicitly or inherent to the process, method, product or device.

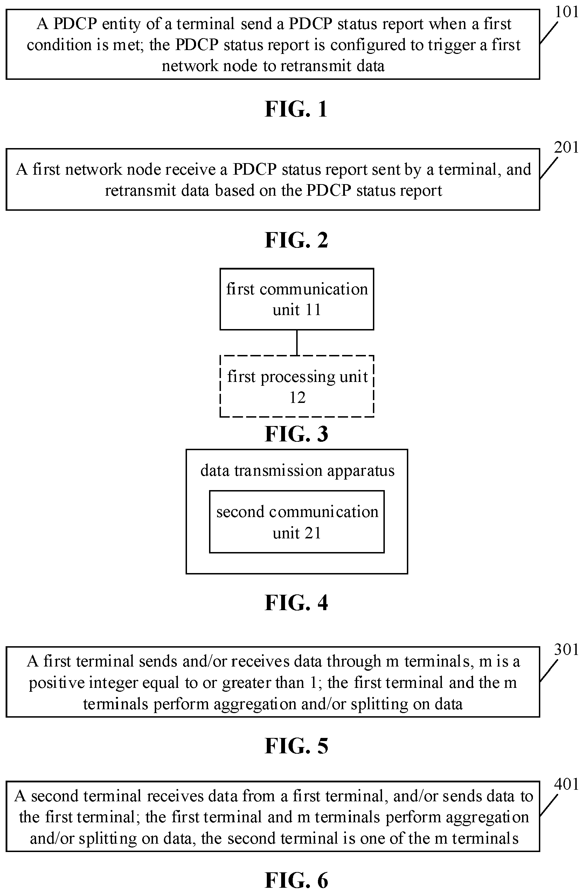

An embodiment of the disclosure provides a data transmission method. FIG. 1 is a first schematic flowchart of a data transmission method according to an embodiment of the disclosure, and as shown in FIG. 1, the method includes the following operation 101.

At 101, a Packet Data Convergence Protocol (PDCP) entity of a terminal sends a PDCP status report when a first condition is met, the first condition includes at least one of:
the PDCP entity detecting that a first PDU is missing;
the PDCP entity detecting that a number of missing first PDUs is greater than or equal to a configured number;
the PDCP entity undergoing modification from a Point To Point (PTP) sending and/or receiving mode to a Point To Multipoint (PTM) sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery.

The PDCP status report is configured to trigger a first network node to retransmit data.

The PDCP entity undergoing modification from the PTP sending and/or receiving mode to the PTM sending and/or receiving mode, represents that the PDCP entity undergoes modification from a PTP transmission mode to a PTM transmission mode; and the transmission mode includes a sending and/or receiving mode.

The radio condition of the service cell is reflected by, but is not limited to the following parameters: Reference Signal Receiving Power (RSRP), Reference Signal Receiving Quality (RSRQ), Received Signal Strength Indication (RSSI), Channel State Information-Reference Signal (CSI-RS) status report.

By using the technical solutions of the embodiments of the disclosure, the PDCP entity of the terminal sends the PDCP status report when the above first condition is met, to trigger the first network node to retransmit data, thereby achieving timely triggering of Automatic Repeat reQuest (ARQ) retransmission, so that transmission performance requirements of high reliability, low delay and large bandwidth can be guaranteed.

In some optional embodiments of the disclosure, the operation of sending, by the PDCP entity of the terminal, the PDCP status report when the first condition is met, includes the following operations. The PDCP entity sends the PDCP status report when the first condition is met, when a discard timer expires. Or, the PDCP entity sends the PDCP status report at a configured period, when the first condition is met.

In this embodiment, the PDCP entity sends the PDCP status report when the above first condition is met, for example, in condition that loss of the first PDU is detected and when the discard timer expires, to trigger the first network node to retransmit data; or, the PDCP entity periodically sends the PDCP status report, to trigger the first network node to retransmit data.

In some optional embodiments of the disclosure, the method further includes the following operations. The PDCP entity remains a starting position of a receiving window of a receiving buffer unchanged.

In a traditional technical solution, the PDCP entity receives data through a receiving window of a buffer, and the receiving window moves along with data transmission; and a starting position of the receiving window is related to identifier (ID) of the data. Even though missing of a PDU is detected, the starting position of the receiving window of the receiving buffer may also move, resulting in that the retransmitted data would not fall within the receiving window, that is, a retransmitted PDU cannot be received.

In this embodiment, when the first condition is met, the PDCP entity remains the starting position of the receiving window of the receiving buffer unchanged. Exemplarily, in condition that loss of the first PDU is detected, the PDCP entity remains the starting position of the receiving window of the receiving buffer changed, so that when the first network node retransmits data, the retransmitted data may fall within the receiving window, to enable the PDCP of the terminal to receive the retransmitted data.

In some optional embodiments of the disclosure, the method further includes the following operations. The terminal receives first configuration information sent by the first network node, the first configuration information includes indication information of at least one of:
sending the PDCP status report when the PDCP entity detects that the first PDU is missing;
sending the PDCP status report when the PDCP entity detects that the number of missing first PDUs is greater than or equal to the configured number;
sending the PDCP status report when the PDCP entity changes from a PTP sending and/or receiving mode to a PTM sending and/or receiving mode;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
the terminal establishing or removing connections for sending and/or receiving a same service, QoS flow, stream or service data flow, or PDU session with other terminals, and sending the PDCP status report; or
sending the PDCP status report, corresponding to an RLC Acknowledged Mode (AM) mode and/or an RLC Unacknowledged Mode (UM) mode.

The AM mode may be referred to as a reliable mode, and in the AM mode, the RLC entity performs error correction through ARQ; the UM mode may be referred to as an unreliable mode, and the RLC entity does not perform retransmission in the UM mode.

In some optional embodiments of the disclosure, the first configuration information further includes indication information of at least one of: whether the PDCP status report to be sent carries information indicating a Hyper Frame Number (HFN) corresponding to the data;
whether the PDCP status report to be sent carries information indicating an absolute time corresponding to the data (here, the absolute time is indicated by Universal Time Coordinated (UTC) or other Global Navigation Satellite System (GNSS) times);
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and a serial number (SN) corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments, in case that a Medium Access Control (MAC) entity of the terminal is connected to at least two PDCP entities through RLC entities respectively, the above PDCP entity is any one of the at least two PDCP entities. That is, in case that the MAC entity of the terminal is connected to at least two PDCP entities through RLC entities respectively, each PDCP entity may multiplex the above data transmission solutions, such the solution of sending the PDCP status report when at least one of the following conditions is met; the solution of remaining the starting position of the receiving window of the receiving buffer unchanged, etc.

In some optional embodiments of the disclosure, the method further includes the following operations. In case that both the PDCP entity and the RLC entity of the terminal have an ARQ function, the terminal receives second configuration information sent by the first network node, and activates or deactivates the ARQ function of the PDCP entity or the RLC entity based on the second configuration information.

In this embodiment, in case that both the PDCP entity and the RLC entity of the terminal have the ARQ function, in order to avoid conflict, the terminal may activate or deactivate the ARQ function of the PDCP entity or the RLC entity based on configuration of the first network node (i.e., the second configuration information).

Exemplarily, the second configuration information may be sent through signaling, for example, the terminal receives signaling sent by the first network node, and the signaling includes the second configuration information.

In some examples, if the terminal is only configured with a PTM link, the second configuration information may be configured to activate the ARQ function of the RLC entity. In some other examples, if the terminal is configured with both PTM and PTP links, the second configuration information may be configured to activate the ARQ function of the PDCP entity.

In some optional embodiments, the method further includes the following operations. The terminal receives third configuration information sent by the first network node, the third configuration information includes a priority of a packet discard timer, a priority of a packet retransmission timer, and a priority of a packet reorganization timer. The terminal performs an operation mechanism corresponding to a timer with a highest priority.

In this embodiment, in case that both the PDCP entity and the RLC entity of the terminal have the ARQ function, the first network node may configure the priority of the packet discard timer, the priority of the packet retransmission timer, and the priority of the packet reorganization timer (i.e., the third configuration information) to the terminal through signaling, and the terminal may perform the operation mechanism corresponding to the timer with the highest priority. For example, if the priority of the packet discard timer is the highest priority, a packet discard operation may be performed; if the priority of the packet retransmission timer is the highest priority, a packet retransmission operation may be performed; if the priority of the packet reorganization timer is the highest priority, a packet reorganization operation may be performed. The above operations may be specifically performed by the PDCP entity or the RLC entity.

In some optional embodiments, the method further includes the following operations. The terminal determines a timer with a shortest timing duration from a packet discard timer, a packet retransmission timer and a packet reorganization timer, based on an operation mechanism corresponding to the timer with the shortest timing duration.

In this embodiment, in case that both the PDCP entity and the RLC entity of the terminal have the ARQ function, the terminal may select and perform the operation mechanism corresponding to the timer with the shortest timing duration, based on timing duration of each timer. For example, if timing duration of the packet discard timer is the shortest timing duration, the packet discard operation may be performed; if timing duration of the packet retransmission timer is the shortest timing duration, the packet retransmission operation may be performed; if timing duration of the packet reorganization timer is the shortest timing duration, the package reorganization operation may be performed. The above operations may be specifically performed by the PDCP entity or the RLC entity.

Based on the above embodiments, an embodiment of the disclosure further provides a data transmission method. FIG. 2 is a second schematic flowchart of a data transmission method according to an embodiment of the disclosure, and as shown in FIG. 2, the method includes the following operation 201.

At 201, a first network node receives a PDCP status report sent by a terminal, and retransmits data based on the PDCP status report.

The PDCP status report is sent when a first condition is met, and the first condition includes at least one of:
a PDCP entity of the terminal detecting that a first PDU is missing;
the PDCP entity of the terminal detecting that a number of missing first PDUs is greater than or equal to a configured number;
the PDCP entity of the terminal undergoing modification from a PTP sending and/or receiving mode to a PTM sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

In some optional embodiments of the disclosure, the method further includes the following operations. The first network node sends first configuration information to the terminal, the first configuration information includes indication information of at least one of:
the PDCP entity of the terminal detecting that the first PDU is missing, and sending the PDCP status report;
the PDCP entity of the terminal detecting that the number of missing first PDUs is greater than or equal to the configured number, and sending the PDCP status report;
the PDCP entity of the terminal undergoing modification from the PTP sending and/or receiving mode to the PTM sending and/or receiving mode, and sending the PDCP status report;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC AM mode and/or an RLC UM mode.

In some optional embodiments of the disclosure, the first configuration information further includes indication information of at least one of:
whether the PDCP status report to be sent carries information indicating an HFN corresponding to the data;
whether the PDCP status report to be sent carries information indicating an absolute time corresponding to the data (here, the absolute time is indicated by UTC or other GNSS times);
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and an SN corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments of the disclosure, the method further includes the following operations. The first network node sends second configuration information to the terminal, the second configuration information is configured to activate or deactivate an ARQ function of the PDCP entity or the RLC entity of the terminal, and both the PDCP entity and the RLC entity of the terminal have the ARQ function.

In some optional embodiments of the disclosure, the method further includes the following operations. The first network node sends third configuration information to the terminal, the third configuration information includes a priority of a packet discard timer, a priority of a packet retransmission timer, and a priority of a packet reorganization timer.

Based on the above embodiments, an embodiment of the disclosure further provides a data transmission apparatus, the apparatus is applied to a terminal. FIG. 3 is a first schematic diagram of a structure of a data transmission apparatus according to an embodiment of the disclosure, and as shown in FIG. 3, the apparatus includes a first communication unit 11. The first communication unit 11 is configured to send a PDCP status report by a PDCP entity when a first condition is met, the first condition includes at least one of:
the PDCP entity detecting that a first PDU is missing;
the PDCP entity detecting that a number of missing first PDUs is greater than or equal to a configured number;
the PDCP entity undergoing modification from a PTP sending and/or receiving mode to a PTM sending and/or receiving mode;
a PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

The PDCP status report is configured to trigger a first network node to retransmit data.

In some optional embodiments of the disclosure, the apparatus further includes a first processing unit 12. The first processing unit 12 is configured to: send, by the PDCP entity, the PDCP status report through the first communication unit 11 when the first condition is met, when a discard timer expires; or, send, by the PDCP entity, the PDCP status report through the first communication unit 11 at a configured period, when the first condition is met.

In some optional embodiments of the disclosure, the apparatus further includes a first processing unit 12. The first processing unit 12 is configured to remain, by the PDCP entity, a starting position of a receiving window of a receiving buffer unchanged.

In some optional embodiments of the disclosure, the first communication unit 11 is further configured to receive first configuration information sent by the first network node.

The first configuration information includes indication information of at least one of:
sending the PDCP status report when the PDCP entity detects that the first PDU is missing;
sending the PDCP status report when the PDCP entity detects that the number of missing first PDUs is greater than or equal to the configured number;
sending the PDCP status report when the PDCP entity changes from a PTP sending and/or receiving mode to a PTM sending and/or receiving mode;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC AM mode and/or an RLC UM mode.

In some optional embodiments of the disclosure, the first configuration information further includes indication information of at least one of:
whether the PDCP status report to be sent carries information indicating an HFN corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and an SN corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments of the disclosure, the first communication unit 11 is further configured to: in case that both the PDCP entity and the RLC entity of the terminal have an ARQ function, receive second configuration information sent by the first network node, and activate or deactivate the ARQ function of the PDCP entity or the RLC entity based on the second configuration information.

In some optional embodiments of the disclosure, the apparatus further includes a first processing unit 12.

The first communication unit 11 is further configured to receive third configuration information sent by the first network node, the third configuration information includes a priority of a packet discard timer, a priority of a packet retransmission timer, and a priority of a packet reorganization timer.

The first processing unit 12 is configured to perform an operation mechanism corresponding to a timer with a highest priority.

In some optional embodiments of the disclosure, the apparatus further includes a first processing unit 12. The first processing unit 12 is configured to determine a timer with a shortest timing duration from a packet discard timer, a packet retransmission timer and a packet reorganization timer, based on an operation mechanism corresponding to the timer with the shortest timing duration.

In the embodiments of the disclosure, in an actual application, the first processing unit 12 in the apparatus may be implemented by a Central Processing Unit (CPU), a Digital Signal Processor (DSP), a Microcontroller Unit (MCU) or a Field-Programmable Gate Array (FPGA); in an actual application, the first communication unit 11 in the apparatus may be implemented by a communication modular assembly (including a basic communication suite, an operating system, a communication module, standardized interface and protocol, etc.) and a transceiver antenna.

An embodiment of the disclosure further provides a data transmission apparatus, the apparatus is applied to a first network node. FIG. 4 is a second schematic diagram of a structure of a data transmission apparatus according to an embodiment of the disclosure, and as shown in FIG. 4, the apparatus includes a second communication unit 21. The second communication unit 21 is configured to receive a PDCP status report sent by a terminal, and retransmit data based on the PDCP status report.

The PDCP status report is sent when a first condition is met, and the first condition includes at least one of:
a PDCP entity of the terminal detecting that a first PDU is missing;
the PDCP entity of the terminal detecting that a number of missing first PDUs is greater than or equal to a configured number;
the PDCP entity of the terminal undergoing modification from a PTP sending and/or receiving mode to a PTM sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
an RLC entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, QoS flow, stream or service data flow, or PDU session with other terminals;
the terminal re-entering a coverage area from a non-coverage area;
a radio condition of a service cell measured by the terminal being equal to or greater than a configured threshold; or
the terminal completing RLF recovery.

In some optional embodiments of the disclosure, the second communication unit 21 is further configured to send first configuration information to the terminal, the first configuration information includes indication information of at least one of:
the PDCP entity of the terminal detecting that the first PDU is missing, and sending the PDCP status report;
the PDCP entity of the terminal detecting that the number of missing first PDUs is greater than or equal to the configured number, and sending the PDCP status report;
the PDCP entity of the terminal undergoing modification from the PTP sending and/or receiving mode to the PTM sending and/or receiving mode, and sending the PDCP status report;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC AM mode and/or an RLC UM mode.

In some optional embodiments of the disclosure, the first configuration information further includes indication information of at least one of:
whether the PDCP status report to be sent carries information indicating an HFN corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and an SN corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

In some optional embodiments of the disclosure, the second communication unit 21 is further configured to send second configuration information to the terminal, the second configuration information is configured to activate or deactivate an ARQ function of the PDCP entity or the RLC entity of the terminal, and both the PDCP entity and the RLC entity of the terminal have the ARQ function.

In some optional embodiments of the disclosure, the second communication unit 21 is further configured to send third configuration information to the terminal, the third configuration information includes a priority of a packet discard timer, a priority of a packet retransmission timer, and a priority of a packet reorganization timer.

In the embodiments of the disclosure, in an actual application, the second communication unit 21 in the apparatus may be implemented by a communication modular assembly (including a basic communication suite, an operating system, a communication module, standardized interface and protocol, etc.) and a transceiver antenna.

An embodiment of the disclosure further provides a data transmission method. FIG. 5 is a third schematic flowchart of a data transmission method according to an embodiment of the disclosure, and as shown in FIG. 5, the method includes the following operation 301.

At 301, a first terminal sends and/or receives data through m terminals, m is a positive integer equal to or greater than 1; it may also be described as data aggregation and/or splitting between the first terminal and the m terminals.

In all the embodiments of the disclosure, sending and/or receiving data by the first terminal through the m terminals may also be described as data aggregation and/or splitting between the first terminal and the m terminals; specifically, it includes at least one of the following situations:
the data sent and/or received by the first terminal through the m terminals and data sent and/or received by the first terminal are same data of a same service;
the data sent and/or received by the first terminal through the m terminals and the data sent and/or received by the first terminal are different data of a same service; or
the data sent and/or received by the first terminal through the m terminals and the data sent and/or received by the first terminal are data of different services.

When the data sent and/or received by the first terminal through the m terminals and the data sent and/or received by the first terminal are data of different services, it may be the case that the first terminal and the m terminals send and/or receive data of associated services.

The associated services may represent at least one of services from the same user, services from the same application server, services associated with the same ID, services from the same QoS flow, services from the same Internet Protocol (IP) flow, services from a same service data flow, or services from a terminal with a group relationship, a multi-path relationship and an aggregation and/or splitting relationship.

The data is at least one of Service Data Adaptation Protocol (SDAP) PDU, PDCP Service Data Unit (SDU), PDCP PDU, RLC SDU, RLC PDU, MAC SDU, MAC PDU, TB, PUSCH transmission, or PDSCH transmission.

In this embodiment, the data sent and/or received by the first terminal through the m terminals refers to data transmitted (sent and/or received) by the first terminal to a first network node through the m terminals, and the above first terminal may also directly send data to the first network node, and/or directly receive data from the first network node, then data which the first terminal directly exchanges with the first network node represents the data sent and/or received by the first terminal, rather than the data sent and/or received by the m terminals.

In some optional embodiments of the disclosure, the method further includes the following operations. The first terminal receives fourth configuration information sent by a core network (CN), the fourth configuration information includes at least one of:

PDU session configuration information; IP address; Temporary Mobile Subscriber Identity (TMSI) ID; General Packet Radio Service (GPRS) Tunnel Protocol-User Plane (GTP-U) tunnel configuration information; registration area; or security parameters.

In this embodiment, the first terminal receives the above fourth configuration information sent by the core network, before the first terminal sends and/or receives data through the m terminals.

In some optional embodiments, the fourth configuration information is applied to data sending and/or reception of at least one of the m terminals.

In some optional embodiments of the disclosure, the method further includes the following operations before the first terminal sends and/or receives data through the m terminals. The first terminal receives fifth configuration information sent by a first network node, the fifth configuration information is configured to configure data aggregation and/or splitting among multiple terminals. The fifth configuration information includes at least one of the following information:
at least one of SDAP configuration information, new logic layer configuration information, PDCP configuration information, RLC configuration information, MAC configuration information or physical layer (PHY) configuration information;
a direction in which the data aggregation and/or splitting is performed;
security information of a service corresponding to the data (the data refers to the data transmitted (sent and/or received) by the first terminal through the m terminals);
one or more Hybrid Automatic Repeat reQuest (HARQ) process numbers configured for the first terminal and each of the m terminals respectively;
one or more common Configured Grants (CGs) and/or Semi-Persistent Scheduling (SPSs) configured for the first terminal and each of the m terminals respectively;
one or more CGs and/or SPSs configured for the first terminal and each of the m terminals respectively;
one or more common Discontinuous Reception (DRX) configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, Bandwidth Parts (BWPs) or beam resources configured for the first terminal and each of the m terminals respectively.

The security information of the service corresponding to the data may be in any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

The new logic layer is used in other functions such as data sequence management, etc.

In all the embodiments of the disclosure, the first network node may forward the fourth configuration information sent by the core network and the sent fifth configuration information in one message or in two independent messages.

In some optional embodiments of the disclosure, the method further includes the following operations. The first terminal forwards all or part of the fifth configuration information to at least one of the m terminals.

In some optional embodiments of the disclosure, the operation of sending and/or receiving, by the first terminal, data through the m terminals includes the following operations. The first terminal forwards data to at least one of the m terminals according to the fifth configuration information, the data is determined according to a position of a common layer.

In case that the position of the common layer is a new logic layer above an SDAP or a PDCP, the data is a PDCP SDU.

In case that the position of the common layer is a PDCP, the data is a PDCP PDU.

In case that the position of the common layer is RLC, the data is an RLC PDU.

In case that the position of the common layer is MAC, the data is a MAC PDU.

In case that the position of the common layer is a PHY, the data is a PUSCH transmission.

In some optional embodiments of the disclosure, the operation of sending and/or receiving, by the first terminal, data through the m terminals includes the following operations. The first terminal sends data to at least one of the m terminals, and/or receives data from the at least one of the m terminals, according to aggregation and/or splitting conditions sent by a first network node or an Artificial Intelligence (AI) control body.

Or, the first terminal autonomously selects to forward data to at least one of the m terminals, and/or receive data from the at least one of the m terminals.

The aggregation and/or splitting conditions include at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

The AI control body is a control entity or logic body used in AI technologies, such as a control entity or logic body used in data analysis, policy decision-making, etc.

In some optional embodiments of the disclosure, the method further includes the following operations. The first terminal sends first indication information to the first network node, the first indication information is configured to indicate that the first terminal starts sending data to at least one of the m terminals, and/or receiving data from the at least one of the m terminals. The first terminal sends second indication information to at least one of the m terminals, the second indication information is configured to indicate that the first terminal starts sending data to the at least one of the m terminals, and/or receiving data from the at least one of the m terminals.

In some optional embodiments of the disclosure, the method further includes the following operations. The first terminal sends first request information to a first network node, the first request information is used by the first terminal to request to send data to at least one of the m terminals, and/or receive data from the at least one of the m terminals.

In some optional embodiments of the disclosure, the method further includes the following operations. First information is exchanged between the first terminal and at least one of the m terminals with a data aggregation and/or splitting relationship before the data aggregation and/or splitting is established, the first information includes at least one of the following information: transmission power capability; Radio Frequency (RF) chain capability; processing capability; supported bandwidth; supported frequency combination; information of transmission delay and/or jitter among the m terminals; or information of a service supporting aggregation and/or splitting among the m terminals.

In some optional embodiments of the disclosure, the method further includes the following operations. The first terminal sends second information to the first network node and/or a core network, the second information includes information of the at least one of the m terminals with the data aggregation and/or splitting relationship, the information of the at least one terminal includes at least one of the following information:
ID of the terminal; or
the first information.

In some optional embodiments of the disclosure, the method further includes the following operations. The first terminal receives a decomposition result of QoS decomposition or 5G service quality identifier (5QI) parameter decomposition made by a first network node on a service or a QoS flow on two or more air interfaces.

Based on the above embodiments, an embodiment of the disclosure further provides a data transmission method. FIG. 6 is a fourth schematic flowchart of a data transmission method according to an embodiment of the disclosure, and as shown in FIG. 6, the method includes the following operation 401.

At 401, a second terminal receives data from a first terminal, and/or sends data to the first terminal, the second terminal is one of m terminals, the first terminal sends and/or receives data through the m terminals, and m is a positive integer equal to or greater than 1.

In some optional embodiments of the disclosure, the method further includes the following operations before the operation 401 is performed. The second terminal receives fifth configuration information sent by a first network node or the first terminal, the fifth configuration information is configured to configure data aggregation and/or splitting among multiple terminals. The fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, data transmitted between the second terminal and the first terminal and data sent and/or received by the first terminal include at least one of the following situations:
the data transmitted between the second terminal and the first terminal and the data sent and/or received by the first terminal are same data of a same service;
the data transmitted between the second terminal and the first terminal and the data sent and/or received by the first terminal are different data of a same service; or
the data transmitted between the second terminal and the first terminal and the data sent and/or received by the first terminal are data of different services.

In some optional embodiments of the disclosure, data transmitted between the second terminal and the first terminal is determined according to a position of a common layer.

In case that the position of the common layer is a new logic layer above an SDAP or a PDCP, the data is a PDCP SDU.

In case that the position of the common layer is a PDCP, the data is a PDCP PDU.

In case that the position of the common layer is RLC, the data is an RLC PDU.

In case that the position of the common layer is MAC, the data is a MAC PDU.

In case that the position of the common layer is a PHY, the data is a PUSCH transmission.

In some optional embodiments of the disclosure, the method further includes the following operations before the operation 401 is performed. The second terminal receives second indication information sent by the first terminal, the second indication information is configured to indicate that the first terminal starts sending data to the second terminal, and/or receiving data from at least one of the m terminals.

In some optional embodiments of the disclosure, the method further includes the following operations before the operation 401 is performed. The second terminal receives all or part of the fifth configuration information sent by the first terminal.

In some optional embodiments of the disclosure, the method further includes the following operations. In case that the second terminal has a data aggregation and/or splitting relationship with the first terminal, first information is exchanged between the first terminal and the second terminal, the first information includes at least one of the following information: transmission power capability; RF chain capability; processing capability; supported bandwidth; supported frequency combination; capability of supporting non-terrestrial networks, information of transmission delay and/or jitter among the m terminals; or information of a service supporting aggregation and/or splitting among the m terminals.

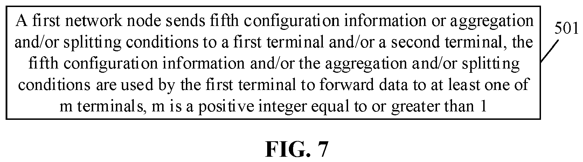

Based on the above embodiments, an embodiment of the disclosure further provides a data transmission method. FIG. 7 is a fifth schematic flowchart of a data transmission method according to an embodiment of the disclosure, and as shown in FIG. 7, the method includes the following operation 501.

At 501, a first network node sends fifth configuration information and/or aggregation and/or splitting conditions to a first terminal and/or a second terminal, the fifth configuration information and/or the aggregation and/or splitting conditions are used by the first terminal to forward data to at least one of m terminals, m is a positive integer equal to or greater than 1, and the second terminal is one of the m terminals. The aggregation and/or splitting conditions represent aggregation and/or splitting conditions of the first terminal and at least one of other m terminals.

In some optional embodiments of the disclosure, the fifth configuration information is further configured to configure data aggregation and/or splitting among multiple terminals, the fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, the aggregation and/or splitting conditions include at least one of the following:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

In some optional embodiments of the disclosure, the method further includes the following operations. The first network node receives first indication information sent by the first terminal, the first indication information is configured to indicate that the first terminal starts forwarding data to the at least one of the m terminals, and/or the first terminal receives data from the at least one of the m terminals.

In some optional embodiments of the disclosure, the method further includes the following operations. The first network node receives first request information sent by the first terminal, the first request information is used by the first terminal to request to forward data to the at least one of the m terminals, and/or used by the first terminal to request to receive data from the at least one of the m terminals.

In some optional embodiments of the disclosure, the method further includes the following operations. The first network node sends third indication information to the first terminal and/or the at least one of the m terminals, the third indication information is configured to indicate that the first terminal starts forwarding data to the at least one of the m terminals, and/or receiving data from the at least one of the m terminals.

In some optional embodiments of the disclosure, the method further includes the following operations. The first network node receives second information sent by the first terminal, the second information includes information of at least one of the m terminals with a data aggregation and/or splitting relationship, the information of the at least one terminal includes at least one of the following information:
ID of the terminal; or
the first information.

In some optional embodiments of the disclosure, the method further includes the following operations. The first network node performs QoS decomposition or 5QI parameter decomposition on a service or a QoS flow on two or more air interfaces, to obtain a decomposition result and send the decomposition result to the first terminal.

The data transmission methods of the embodiments of the disclosure will be described below with reference to specific examples.

### First example

In this example, services (data) are transmitted (including "received" and/or "sent") by using multiple User Equipment (UEs).

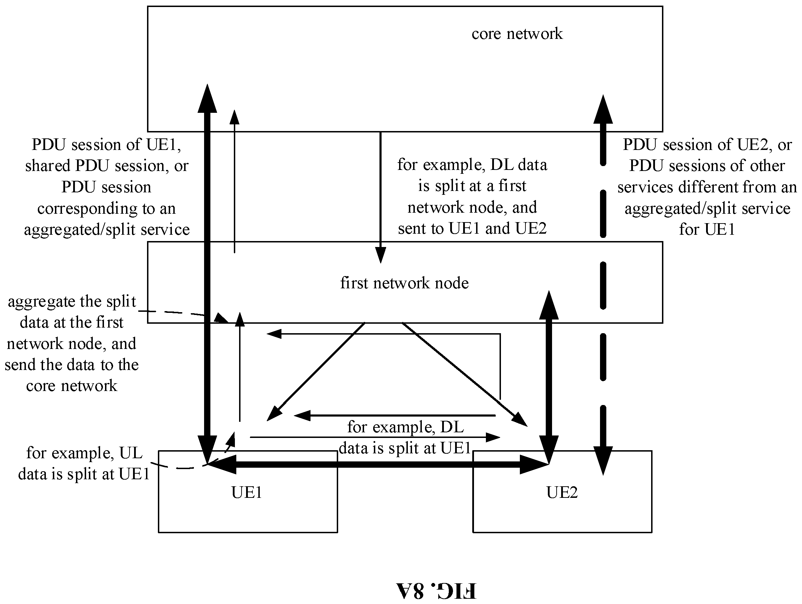

Two UEs are taken as an example below, and as shown in FIG. 8A, for example, the two UEs are marked as UE1 and UE2 respectively.

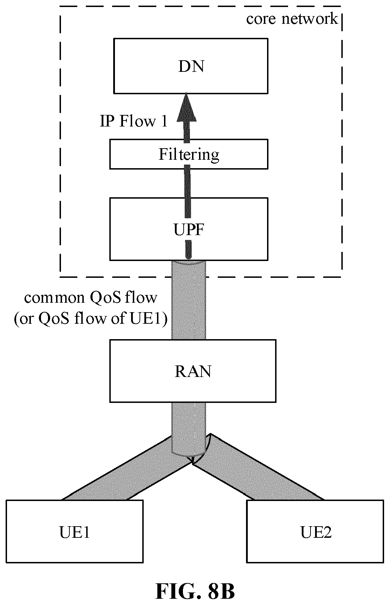

A first link existing between multiple UEs may be an interface such as Wireless Fidelity (Wi-Fi), Uu, Bluetooth, PC5, or a bus, etc. Two separate PDU sessions are established for the two UEs, i.e., UE1 PDU session and UE2 PDU session respectively. A path of the UE1 PDU session refers to a solid line of FIG. 8A, and a path of the UE2 PDU session refers to a dashed line of FIG. 8B. With regard to an aggregated and/or split service, the core network establishes a set of configurations (i.e., the fourth configuration information in the foregoing embodiments) with only one UE (such as an anchor UE, UE1), that is, UE1 in this example is equivalent to the foregoing first terminal. The fourth configuration information includes at least one of: PDU session configuration information; IP address; TMSI ID; GTP-U tunnel configuration information; Non-Access-Stratum (NAS) configuration information; registration area; or security parameters.

Or, with regard to the aggregated and/or split service, a common configuration is established between the core network and multiple UEs. This configuration may be referred to as sixth configuration information, and the sixth configuration information includes at least one of: common PDU session configuration information; common IP address; common TMSI ID; common GTP-U tunnel configuration information; NAS configuration; common registration area; or common security parameters.

In order to ensure service quality during scheduling or transmission, for example, Data Radio Bearer (DRB) 1 corresponding to service 1 is sent and/or received in UE1, and DRB2 corresponding to service 2 is sent and/or received in UE2; another example is that different or same data of DRB 1 corresponding to service 1 are split in UE1 and UE2, that is, UE1 directly sends/receives data of DRB1 corresponding to service 1 with the first network node, for example, such data may be referred to as second data; UE1 may also send/receive data of DRB 1 corresponding to service 1 to the first network node through UE2, for example, such data may be referred to as first data; contents of the first data and the second data may be the same or different. With regard to downlink (DL) and uplink (UL), there will be a common logic layer at a Radio Access Network (RAN) and/or UE side respectively, to guarantee service quality and continuity, that is, data aggregation and/or splitting are operated at at least one of the following layers: SDAP, new logic layer, PDCP, RLC, MAC or PHY.

The new logic layer is used in other functions such as data sequence management, etc.

Therefore, the first network node (such as a RAN node) configures configuration of data aggregation and/or splitting among multiple UEs, and establishes DRB corresponding to the service (or QoS flow) on multiple UEs; other UEs (such as UE2) may establish a Radio Resource Control (RRC) connection with the first network node, or may not establish the RRC connection.

Exemplarily, the first network node (such as the RAN node) sends the fifth configuration information to UEs (such as UE1 and UE2) performing data aggregation and/or splitting; or, the first network node (such as the RAN node) sends the fifth configuration information to one of the UEs performing data aggregation and/or splitting (such as UE1), and then UE1 forwards all or part of the fifth configuration information to other UEs (such as UE2). The fifth configuration information includes at least one of the following information: at least one of SDAP configuration information, new logic layer configuration information, PDCP configuration information, RLC configuration information, MAC configuration information or PHY configuration information;
a direction in which the data aggregation and/or splitting is performed, such as upward and/or downward;
security information of a service (such as at least one of QoS flow, radio bearer, or logical channel) corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

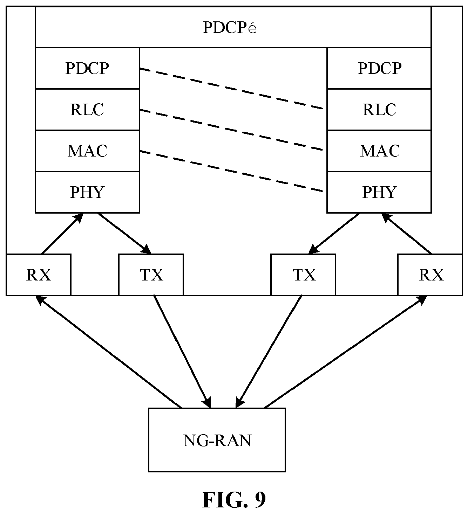

With reference to FIG. 9, for example, if the common layer is a PDCP layer, the fifth configuration information sent to UE1 includes SDAP configuration information, PDCP configuration information, RLC configuration information, MAC configuration information, and PHY configuration information; the fifth configuration information sent to UE2 includes RLC configuration information, MAC configuration information, and PHY configuration information.

For example, if the common layer is SDAP and/or a new logic layer, the fifth configuration information sent to UE1 includes SDAP configuration information, new logic layer configuration information, PDCP configuration information, RLC configuration information, MAC configuration information, and PHY configuration information; the fifth configuration information sent to UE2 includes PDCP configuration information, RLC configuration information, MAC configuration information, and PHY configuration information.

For example, if the common layer is an RLC layer, the fifth configuration information sent to UE1 includes SDAP configuration information, PDCP configuration information, RLC configuration information, MAC configuration information, and PHY configuration information; the fifth configuration information sent to UE2 includes MAC configuration information, and PHY configuration information.

For example, if the common layer is a MAC layer, the fifth configuration information sent to UE1 includes SDAP configuration information, PDCP configuration information, RLC configuration information, MAC configuration information, and PHY configuration information; the fifth configuration information sent to UE2 includes PHY configuration information.

With reference to FIG. 8B, data from UE2 and UE1 (for example, in the PDCP entity) are combined (or reordered) at the first network node (such as the RAN node), a part of information (such as UE identity, bearer information, etc.) may be exchanged between UE1 and UE2, or configured by the first network node (such as the RAN node).

When UL data arrives, UE1 may send the data on the current UE (i.e., UE1) or forward the data to other UEs (such as UE2) according to aggregation and/or splitting conditions sent by the network or AI control body.

Or, when UL data arrives, UE1 autonomously selects to send the data on the current UE (i.e., UE1) or forward the data to other UEs (such as UE2).

Specifically, the forwarded data is determined according to the position of the common layer.

If the position of the common layer is a new logic layer above an SDAP or a PDCP, the forwarded data is a PDCP SDU.

If the position of the common layer is a PDCP, the forwarded data is a PDCP PDU.

If the position of the common layer is RLC, the forwarded data is an RLC PDU.

If the position of the common layer is MAC, the forwarded data is a MAC PDU.

If the position of the common layer is a PHY, a PUSCH transmission is forwarded.

The aggregation and/or splitting conditions include at least one of the following situations:
transmission power of UE1 is greater than or equal to a certain threshold;
UE1 receives s a paging message about a service that is aggregatable and/or splittable;
a data loss rate of UE1 is greater than or equal to a certain threshold;
UE1 enters an RLF status;
an amount of data arriving at UE1 is greater than or equal to a certain threshold;
an amount of data in a buffer area of UE1 is greater than or equal to a certain threshold;
a rate of a service (such as at least one of QoS flow, radio bearer, or logical channel) corresponding to data of UE1 is greater than or equal to a certain threshold;
reliability of the service (such as at least one of QoS flow, radio bearer, or logical channel) corresponding to the data of UE1 is greater than or equal to a certain threshold; or
delay of the service (such as at least one of QoS flow, radio bearer, or logical channel) corresponding to the data of UE1 is less than or equal to a certain threshold.

In some optional embodiments, a UE (such as UE2) notifies the first network node (such as the RAN node) after obtaining relevant information from UE1, that UE2 will start or stop forwarding data of UE1 belonging to a specific DRB, therefore aggregation or splitting processes must be restarted or stopped in the corresponding DRB (such as PDCP). Optionally, with regard to indication of UE2 to the first network node (such as the RAN node), UE1 must provide UE2 with configuration information such as ID of UE1 (such as Cell-Radio Network Temporary Identifier (C-RNTI)), DRB ID corresponding to data of UE1, and/or logical channel, etc.

Optionally, UE1 may report relevant UE information (such as information of UE2) to the core network in a certain manner, such as capability information, or grant information, or the like; or, an aggregation relationship is pre-configured in a Home Subscriber Server (HSS) of the core network or other database nodes. Or, it may be obtained from pre-configuration information of UE.

Traffic flow from UE2 (belonging to UE1) will be encrypted based on a key of UE2, and then at the first network node (such as the RAN node) side, the traffic flow must be decrypted first using the key of UE2 in PDCP of UE2, and then delivered to PDCP of UE1, to be reordered.

Since PDU session of the service is triggered by UE1 in an aggregation manner, UE2 inherits key information of the service from UE1.

Or, since NAS parameters (including KAMF, NH) of an aggregation service are only allocated to UE1; if it goes to an aggregation PDCP option, only one PDCP is allocated to the split DRB, and security parameters used by UE1 and UE2 for data are the same.

Or, in a configuration that two UEs have two independent PDCPs, two sets of security parameters may be configured in an Access-Stratum (AS).

Or, UE1 encrypts a data packet first using a key of UE1, "encrypted PDCP PDU" is sent to UE2 (for example, using Wi-Fi), and then UE2 sends it to the first network node (such as the RAN node) (possibly, re-encrypts it using the key of UE2). Then, from the first network node (such as the RAN node) side, PDCP of UE2 in the first network node (such as the RAN node) decrypts it and passes it to PDCP of UE1 in the first network node (such as the RAN node), and finally PDCP of UE1 in the first network node (such as the RAN node) decrypts the data packet.

Optionally, the core network sends multiple UE grouping permission information to the first network node, before data aggregation and/or splitting is established.

The core network or the first network node performs QoS decomposition or 5QI parameter decomposition on the service or QoS flow on two or more air interfaces, to obtain a decomposition result and send the decomposition result to the first terminal; for example, decomposes parameters such as delay, jitter, rate, bandwidth, or the like on two or more air interfaces. The first network node informs UE (such as UE1) of decomposed parameters; optionally, the core network informs the first network node and/or UE (such as UE1) of the decomposed parameters. Optionally, CU informs DU of the decomposed parameters through F1.

Optionally, first information needs to be exchanged between UEs (such as UE1 and UE2) with a data aggregation and/or splitting relationship before the data aggregation and/or splitting is established, the first information includes at least one of the following parameters: transmission power capability, RF chain capability, processing capability, supported bandwidth, supported frequency combination, or information of transmission delay between UE1 and UE2.

Optionally, first information needs to be exchanged between UEs (such as UE1 and UE2) with the data aggregation and/or splitting relationship before the data aggregation and/or splitting is established, the first information includes at least one of the following parameters: transmission power capability, RF chain capability, processing capability, supported bandwidth, supported frequency combination, or information of transmission delay between UE1 and UE2; and UE1 informs at least one of the first network node, the core network, or the AI control body of the first information exchanged between UE1 and UE2.

Optionally, when UEs with the data aggregation and/or splitting relationship are located in different first network nodes, all or part of the above fourth configuration information and/or the first information need to be exchanged between the first network nodes.

### Second example

In this example, the core network does not perceive the aggregation and/or splitting relationship of multiple UEs, only the first network node perceives the aggregation and/or splitting relationship of the multiple UEs.

The first network node (such as the RAN node) is only allowed to know ID and corresponding association relationship (such as C-RNTI) between aggregation and/or splitting and UE, that is, the core network may know only one UE (such as an anchor UE, UE1), without knowing existence of other associated UEs (such as UE2).

Other operations are the same as those of the first example.

### Third example

When any one of UE1 and/or UE2 initiates a conditional handover process, it notifies other UEs through the first link, for example, UE1 notifies UE2, and triggers other UEs to perform conditional handover together.

UE1 notifies UE2 of at least one of the following information:
start handover;
at least one of a switch-to target cell, the first network node, carrier information, or beam information;
post-handover configuration information, including at least one of configuration information of an L2 protocol stack, PHY configuration information, or measurement information; or
time information for performing handover.

### Fourth example

When the network side sends handover information to any one of UE1 and/or UE2, it notifies other UEs through the first link, for example, UE1 notifies UE2, and triggers other UEs to switch together.

UE1 notifies UE2 of at least one of the following information:
start handover;
at least one of a switch-to target cell, the first network node, carrier information, or beam information;
post-handover configuration information, including at least one of configuration information of an L2 protocol stack, PHY configuration information, or measurement information; or
time information for performing handover.

### Fifth example

When the network side sends handover information to UE1 and UE2 and carries indication information, the indication information includes at least one of the following information:
information of other UEs which perform handover together;
information of a service (such as at least one of QoS flow, radio bearer, or logical channel) performing aggregation and/or splitting with other UEs which perform handover together;
at least one of a switch-to target cell, the first network node, carrier information, or beam information of other UEs which perform handover together; or
post-handover configuration information of other UEs which perform handover together, including at least one of configuration information of an L2 protocol stack, PHY configuration information, or measurement information.

### Sixth example

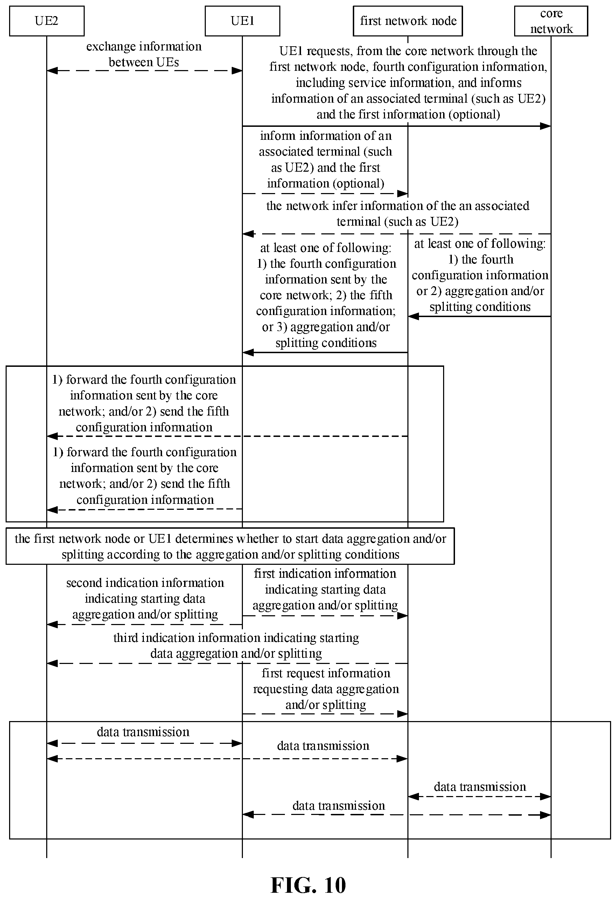

FIG. 10 is a schematic diagram of interaction processes of a data transmission method according to an embodiment of the disclosure, and as shown in FIG. 10, the method includes the following operations.

Information is exchanged between UE1 and UE2, and specifically, the exchanged information may be the first information in the foregoing embodiments, and for example, the first information includes at least one of the following information: transmission power capability; RF chain capability; processing capability; supported bandwidth; supported frequency combination; information of transmission delay and/or jitter among the m terminals; or information of a service supporting aggregation and/or splitting among the m terminals.

UE1 requests, from the core network through the first network node (such as a base station), fourth configuration information, including service information, etc. Exemplarily, the fourth configuration information includes at least one of: PDU session configuration information; IP address; TMSI ID; GTP-U tunnel configuration information; registration area; or security parameters. Optionally, UE1 may also inform the core network of information of a terminal with an association relationship (such as information of UE2), the above first information, or the like through the first network node (such as the base station).

Optionally, UE1 may also inform the core network of information of an associated terminal (such as information of UE2), the above first information, or the like through the first network node (such as the base station) individually.

Optionally, UE1 informs the first network node (such as the base station) of information of an associated terminal (such as information of UE2), the above first information, etc.

Optionally, the core network may also push information of a terminal with an association relationship with UE1 (such as information of UE2) to UE1 and/or the first network node, according to information such as a database, etc.

The core network sends at least one of the fourth configuration information or aggregation and/or splitting conditions to the first network node, and the first network node sends at least one of the fourth configuration information, the fifth configuration information, or aggregation and/or splitting conditions to UE1.

Contents included in the fifth configuration information may refer to descriptions of the above embodiments, which are not elaborated here.

Contents included in the aggregation and/or splitting conditions may refer to descriptions of the above embodiments, which are not elaborated here.

Optionally, UE1 sends the fourth configuration information and/or the fifth configuration information to UE2, and/or the first network node sends the fourth configuration information and/or the fifth configuration information to UE2.

The first network node or UE1 determines whether data aggregation and/or splitting is started, according to the aggregation and/or splitting conditions.

In case of determining to start the data aggregation and/or splitting, UE1 sends first indication information to the first network node, the first indication information is configured to indicate that UE1 starts sending data to UE2, and/or receiving data from UE2; UE1 sends second indication information to UE2, the second indication information is configured to indicate that UE1 starts sending data to UE2, and/or receiving data from UE2.

And/or, the first network node sends third indication information to UE2, the third indication information is configured to indicate that UE1 starts sending data to UE2, and/or receiving data from UE2.

Or, UE1 sends first request information to the first network node, the first request information is used by UE1 to request to send data to UE2, and/or receive data from UE2.

Furthermore, UE1 may perform data transmission (receiving and/or sending data) through UE2, and data transmission (receiving and/or sending data) may be performed between UE2 and the first network node.

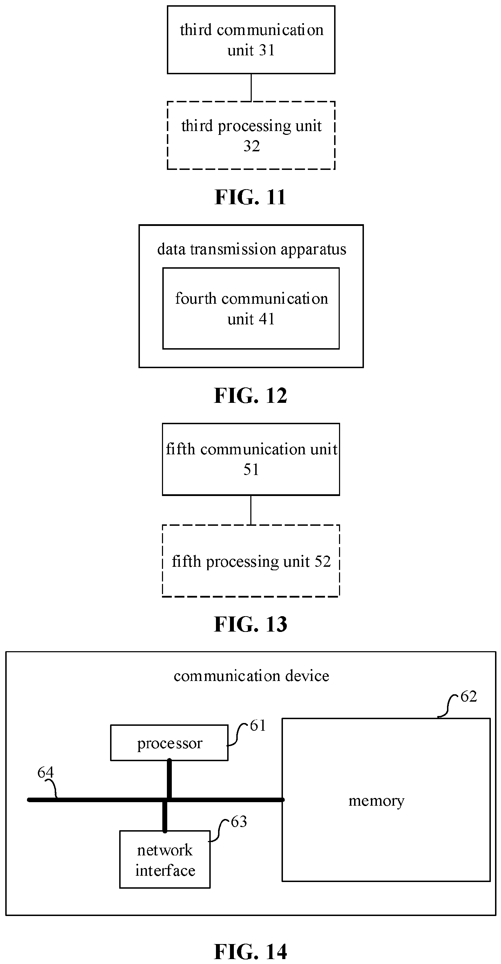

Based on the above embodiments, an embodiment of the disclosure further provides a data transmission apparatus. FIG. 11 is a third schematic diagram of a structure of a data transmission apparatus according to an embodiment of the disclosure, and as shown in FIG. 11, the apparatus is applied to a first terminal, and the apparatus includes a third communication unit 31. The third communication unit 31 is configured to send and/or receive data through m terminals, m is a positive integer equal to or greater than 1.

In some optional embodiments of the disclosure, the third communication unit 31 is further configured to receive fourth configuration information sent by a core network, the fourth configuration information includes at least one of: PDU session configuration information; IP address; TMSI ID; GTP-U tunnel configuration information; registration area; or security parameters.

In some optional embodiments of the disclosure, the fourth configuration information is applied to data sending and/or receiving of at least one of the m terminals.

In some optional embodiments of the disclosure, the data sent and/or received by the first terminal through the m terminals and data sent and/or received by the first terminal include at least one of the following situations:
the data sent and/or received by the first terminal through the m terminals and the data sent and/or received by the first terminal are same data of a same service;
the data sent and/or received by the first terminal through the m terminals and the data sent and/or received by the first terminal are different data of a same service; or
the data sent and/or received by the first terminal through the m terminals and the data sent and/or received by the first terminal are data of different services.

In some optional embodiments of the disclosure, the third communication unit 31 is further configured to receive fifth configuration information sent by a first network node, the fifth configuration information is configured to configure data aggregation and/or splitting among multiple terminals, the fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, the third communication unit 31 is further configured to forward all or part of the fifth configuration information to at least one of the m terminals.

In some optional embodiments of the disclosure, the third communication unit 31 is configured to forward data to at least one of the m terminals according to the fifth configuration information, the data is determined according to a position of a common layer.

In case that the position of the common layer is a new logic layer above an SDAP or a PDCP, the data is a PDCP SDU.

In case that the position of the common layer is a PDCP, the data is a PDCP PDU.

In case that the position of the common layer is RLC, the data is an RLC PDU.

In case that the position of the common layer is MAC, the data is a MAC PDU.

In case that the position of the common layer is a PHY, the data is a PUSCH transmission.

In some optional embodiments of the disclosure, the apparatus further includes a third processing unit 32. The third processing unit 32 is configured to send, by the third communication unit 31, data to at least one of the m terminals, and/or receive, by the third communication unit 31, data from the at least one of the m terminals, according to aggregation and/or splitting conditions sent by a first network node or an AI control body; or autonomously select to send data to at least one of the m terminals, and/or receive data from the at least one of the m terminals.

The aggregation and/or splitting conditions include at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

In some optional embodiments of the disclosure, the third communication unit 31 is further configured to send first indication information to the first network node, the first indication information is configured to indicate that the first terminal starts sending data to at least one of the m terminals, and/or receiving data from the at least one of the m terminals; and further configured to send second indication information to at least one of the m terminals, the second indication information is configured to indicate that the first terminal starts sending data to the at least one of the m terminals, and/or receiving data from the at least one of the m terminals.

In some optional embodiments of the disclosure, the third communication unit 31 is further configured to send first request information to a first network node, the first request information is used by the first terminal to request to forward data to at least one of the m terminals.

In some optional embodiments of the disclosure, the third communication unit 31 is further configured to exchange first information with at least one of the m terminals with a data aggregation and/or splitting relationship before the data aggregation and/or splitting is established, the first information includes at least one of the following information: transmission power capability; RF chain capability; processing capability; supported bandwidth; supported frequency combination; information of transmission delay and/or jitter among the m terminals; or information of a service supporting aggregation and/or splitting among the m terminals.

In some optional embodiments of the disclosure, the third communication unit 31 is further configured to send second information to the first network node and/or a core network, the second information includes information of the at least one of the m terminals with the data aggregation and/or splitting relationship, the information of the at least one terminal includes at least one of the following information:
ID of the terminal; or
the first information.

In some optional embodiments of the disclosure, the third communication unit 31 is further configured to receive a decomposition result of QoS decomposition or 5QI parameter decomposition made by a first network node on a service or a QoS flow on two or more air interfaces.

In the embodiments of the disclosure, in an actual application, the third processing unit 32 in the apparatus may be implemented by a CPU, a DSP, an MCU or an FPGA; in an actual application, the third communication unit 31 in the apparatus may be implemented by a communication modular assembly (including a basic communication suite, an operating system, a communication module, standardized interface and protocol, etc.) and a transceiver antenna.

An embodiment of the disclosure further provides a data transmission apparatus. FIG. 12 is a fourth schematic diagram of a structure of a data transmission apparatus according to an embodiment of the disclosure, and as shown in FIG. 12, the apparatus is applied to a second terminal, and the apparatus includes a fourth communication unit 41. The fourth communication unit 41 is configured to receive data from a first terminal, and/or send data to the first terminal, the second terminal is one of m terminals, the first terminal sends and/or receives data through the m terminals, and m is a positive integer equal to or greater than 1.

In some optional embodiments of the disclosure, the fourth communication unit 41 is further configured to receive fifth configuration information sent by a first network node or the first terminal, the fifth configuration information is configured to configure data aggregation and/or splitting among multiple terminals.

The fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, data transmitted between the second terminal and the first terminal and data sent and/or received by the first terminal include at least one of the following situations:
the data transmitted between the second terminal and the first terminal and the data sent and/or received by the first terminal are same data of a same service;
the data transmitted between the second terminal and the first terminal and the data sent and/or received by the first terminal are different data of a same service; or
the data transmitted between the second terminal and the first terminal and the data sent and/or received by the first terminal are data of different services.

In some optional embodiments of the disclosure, data transmitted between the second terminal and the first terminal is determined according to a position of a common layer.

In case that the position of the common layer is a new logic layer above a SDAP or a PDCP, the data is a PDCP SDU.

In case that the position of the common layer is a PDCP, the data is a PDCP PDU.

In case that the position of the common layer is RLC, the data is an RLC PDU.

In case that the position of the common layer is MAC, the data is a MAC PDU.

In case that the position of the common layer is a PHY, the data is a PUSCH transmission.

In some optional embodiments of the disclosure, the fourth communication unit 41 is further configured to receive second indication information sent by the first terminal, the second indication information is configured to indicate that the first terminal starts sending data to the second terminal, and/or receiving data from at least one of the m terminals.

In the embodiments of the disclosure, in an actual application, the fourth communication unit 41 in the apparatus may be implemented by a communication modular assembly (including a basic communication suite, an operating system, a communication module, standardized interface and protocol, etc.) and a transceiver antenna.

An embodiment of the disclosure further provides a data transmission apparatus, the apparatus is applied to a first network node. FIG. 13 is a fifth schematic diagram of a structure of a data transmission apparatus according to an embodiment of the disclosure, and as shown in FIG. 13, the apparatus is applied to a first network node, and the apparatus includes a fifth communication unit 51. The fifth communication unit 51 is configured to send fifth configuration information or aggregation and/or splitting conditions to a first terminal and/or a second terminal, the fifth configuration information and/or the aggregation and/or splitting conditions are used by the first terminal to forward data to at least one of m terminals, m is a positive integer equal to or greater than 1, and the second terminal is one of the m terminals.

In some optional embodiments of the disclosure, the fifth configuration information is further configured to configure data aggregation and/or splitting among multiple terminals.

The fifth configuration information includes at least one of the following information:
at least one of SDAP configuration information, new logic layer configuration information, PDCP configuration information, RLC configuration information, MAC configuration information or PHY configuration information;
a direction in which the data aggregation and/or splitting is performed;
security information of a service corresponding to the data;
one or more HARQ process numbers configured for the first terminal and each of the m terminals respectively;
one or more common CGs and/or SPSs configured for the first terminal and each of the m terminals respectively;
one or more CGs and/or SPSs configured for the first terminal and each of the m terminals respectively;
one or more common DRX configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, here k is a natural number greater than 1; or
at least one of carriers, BWPs or beam resources configured for the first terminal and each of the m terminals respectively.

The security information of the service corresponding to the data includes any one of the following situations:
the security information of the service corresponding to the data is applied to all of the first terminal and the m terminals; or
the security information of the service corresponding to the data includes multiple configurations, and security information of multiple configurations are applied to the first terminal and the m terminals respectively.

In some optional embodiments of the disclosure, the aggregation and/or splitting conditions include at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters an RLF status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

In some optional embodiments of the disclosure, the fifth communication unit 51 is further configured to receive first indication information sent by the first terminal, the first indication information is configured to indicate that the first terminal starts sending data to the at least one of the m terminals, and/or the first terminal receives data from the at least one of the m terminals.

In some optional embodiments of the disclosure, the fifth communication unit 51 is further configured to receive first request information sent by the first terminal, the first request information is used by the first terminal to request to send data to the at least one of the m terminals, and/or used by the first terminal to request to receive data from the at least one of the m terminals.

In some optional embodiments of the disclosure, the fifth communication unit 51 is further configured to receive second information sent by the first terminal, the second information includes information of at least one of the m terminals with a data aggregation and/or splitting relationship, the information of the at least one terminal includes at least one of the following information:
ID of the terminal; or
the first information.

In some optional embodiments of the disclosure, the apparatus further includes a fifth processing unit 52. The fifth processing unit 52 is configured to perform QoS decomposition or 5QI parameter decomposition on a service or a QoS flow on two or more air interfaces, to obtain a decomposition result.

The fifth communication unit 51 is further configured to send the decomposition result to the first terminal.

In the embodiments of the disclosure, in an actual application, the fifth processing unit 52 in the apparatus may be implemented by a CPU, a DSP, an MCU or an FPGA; in an actual application, the fifth communication unit 51 in the apparatus may be implemented by a communication modular assembly (including a basic communication suite, an operating system, a communication module, standardized interface and protocol, etc.) and a transceiver antenna.

It should be noted that when the data transmission apparatuses provided in the above embodiments perform data transmission, division of the above program modules is exemplified only. In an actual application, the above processing may be allocated to be completed by different program modules according to requirements, that is, internal structures of the apparatus are divided into different program modules, to complete all or part of the above processing. Furthermore, the data transmission apparatuses provided in the above embodiments belong to the same concept as embodiments of the data transmission methods, and specific implementation processes thereof refer to the method embodiments for the details, which are not elaborated here.

An embodiment of the disclosure further provides a communication device, and the communication device may be the terminal or network node in the foregoing embodiments. FIG. 14 is a schematic diagram of hardware a structure of a communication device according to an embodiment of the disclosure. As shown in FIG. 14, the communication device includes a memory 62, a processor 61, and a computer program stored on the memory 62 and executable on the processor 61, the processor 61 implements operations of the data transmission method according to the embodiment of the disclosure which is applied to the terminal (such as the first terminal or the second terminal) or the first network node, when the processor 61 executes the program.

Optionally, the communication device further includes one or more network interfaces 63. Various components in the communication device are coupled together through a bus system 64. It may be understood that the bus system 64 implements connection and communication between these components. The bus system 64 includes a power bus, a control bus and a status signal bus, in addition to a data bus. However, various buses are labeled as the bus system 64 in FIG. 14, for clarity of illustration.

It may be understood that the memory 62 may be a volatile memory or a non-volatile memory, and may also include both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk, or a Compact Disc Read-Only Memory (CD-ROM); the magnetic surface memory may be a magnetic disk memory or a magnetic tape memory. The volatile memory may be a Random Access Memory (RAM) used as an external cache. By way of exemplary descriptions rather than limitation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 62 described in the embodiment of the disclosure is intended to include, but is not limited to these memories and any other suitable types of memories.

The methods disclosed in the above embodiments of the disclosure may be applied to the processor 61 or implemented by the processor 61. The processor 61 may be an integrated circuit chip with signal processing capability. During implementation, each operation of the above methods may be completed by an integrated logic circuit in form of hardware in the processor 61 or instructions in form of software. The processor 61 may be a general-purpose processor, a DSP, or another programmable logic device, discrete gate or transistor logic device, discrete hardware component, etc. The processor 61 may implement or perform various methods, operations and logic block diagrams disclosed in the embodiments of the disclosure. The general-purpose processor may be a microprocessor or any conventional processor, etc. Operations of the methods disclosed in combination with the embodiments of the disclosure may be directly embodied as being performed and completed by a hardware decoding processor, or performed and completed by a combination of hardware in the decoding processor and software modules. The software module may be located in a storage medium, and the storage medium is located in the memory 62. The processor 61 reads information in the memory 62, and completes operations of the foregoing methods in combination with hardware thereof.

In an exemplary embodiment, the communication device may be implemented by one or more of an Application Specific Integrated Circuit (ASIC), a DSP, a Programmable Logic Device (PLD), a Complex Programmable Logic Device (CPLD), an FPGA, a general-purpose processor, a controller, an MCU, a microprocessor or other electronic components, to perform the foregoing methods.

In an exemplary embodiment, an embodiment of the disclosure further provides a computer-readable storage medium, such as the memory 62 including a computer program, and the computer program may be executed by the processor 61 of the communication device to complete operations of the foregoing methods. The computer-readable storage medium may be an FRAM, a ROM, a PROM, an EPROM, an EEPROM, a flash memory, a magnetic surface memory, an optical disk, or a CD-ROM, or other memories; the computer-readable storage medium may also be various devices including one or any combination of the above memories.

The computer-readable storage medium provided in the embodiment of the disclosure, has stored thereon a computer program, the program implements operations of the data transmission method according to the embodiment of the disclosure which is applied to the terminal (such as the first terminal or the second terminal) or the first network node, when the program is executed by a processor.

Methods disclosed in several method embodiments provided in the disclosure may be arbitrarily combined without conflict, to obtain a new method embodiment.

Features disclosed in several product embodiments provided in the disclosure may be arbitrarily combined without conflict, to obtain a new product embodiment.

Features disclosed in several method or device embodiments provided in the disclosure may be arbitrarily combined without conflict, to obtain a new method or device embodiment.

In several embodiments provided in the disclosure, it should be understood that the disclosed devices and methods may be implemented in other manners. The above device embodiments are only exemplary. For example, division of the units is only a logical function division. In an actual implementation, there may be other division manners, for example, multiple units or components may be combined, or may be integrated into another system, or some features may be ignored, or may not be performed. Furthermore, coupling or direct coupling or communication connection between the components as shown or discussed may be indirect coupling or communication connection through some interfaces, devices or units, and may be in electrical, mechanical or other forms.

The above units described as separate components may be or may not be physically separated, and the components displayed as units may be or may not be physical units, that is, they may be located in one place or may be distributed to multiple network units; part or all of the units may be selected according to actual requirements, to achieve purposes of the solutions of the embodiments.

Furthermore, each functional unit in each embodiment of the disclosure may be integrated into a processing unit, or each unit may be separately used as a unit respectively, or two or more units may be integrated into a unit; the above integrated unit may be implemented in form of hardware, or may be implemented in form of hardware plus software function units.

It may be understood by those of ordinary skill in the art that all or part of operations for implementing the above method embodiments may be completed by hardware related to program instructions, and the foregoing program may be stored in a computer-readable storage medium. When the program is executed, the program executes operations including the above method embodiments. The foregoing storage medium includes various media capable of storing program codes, such as a mobile storage device, a ROM, a RAM, a magnetic disk, or an optical disk, etc.

Or, when the above integrated unit of the disclosure is implemented in form of software function module and sold or used as an independent product, the integrated unit may also be stored in a computer-readable storage medium. Based on such understanding, the technical solutions of the embodiments of the disclosure substantially or parts making contributions to the related art may be embodied in form of software product, and the computer software product is stored in a storage medium, includes multiple instructions to enable a computer device (which may be a personal computer, a server, or the first network device, etc.) to perform all or part of the method in each embodiment of the disclosure. The foregoing storage medium includes various media capable of storing program codes, such as a mobile storage device, a ROM, a RAM, a magnetic disk, or an optical disk, etc.

The above descriptions are only specific implementations of the disclosure, however, the scope of protection of the disclosure is not limited thereto. Modifications or replacements easily conceived by any technician familiar with this technical field within the technical scope disclosed in the disclosure, should fall within the scope of protection of the disclosure. Therefore, the scope of protection of the disclosure should be subjected to the scope of protection of claims.

## Claims

1. A data transmission method, comprising:
sending, by a Packet Data Convergence Protocol (PDCP) entity of a terminal, a PDCP status report when a first condition is met, wherein the first condition comprises at least one of:
the PDCP entity detecting that a first Protocol Data Unit (PDU) is missing;
the PDCP entity detecting that a number of missing first PDUs is greater than or equal to a configured number;
the PDCP entity undergoing modification from a Point To Point (PTP) sending and/or receiving mode to a Point To Multipoint (PTM) sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, Quality of Service (QoS) flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery,
wherein the PDCP status report is configured to trigger a first network node to retransmit data.

2. The method of claim 1, wherein sending, by the PDCP entity of the terminal, the PDCP status report when the first condition is met, comprises:
sending, by the PDCP entity, the PDCP status report when the first condition is met, when a discard timer or a reorganization timer expires; or,
sending, by the PDCP entity, the PDCP status report at a configured period, when the first condition is met.

3. The method of claim 1, further comprising:
remaining, by the PDCP entity, a starting position of a receiving window of a receiving buffer unchanged.

4. The method of claim 1, further comprising:
receiving, by the terminal, first configuration information sent by the first network node,
wherein the first configuration information comprises indication information of at least one of:
sending the PDCP status report when the PDCP entity detects that the first PDU is missing;
sending the PDCP status report when the PDCP entity detects that the number of missing first PDUs is greater than or equal to the configured number;
sending the PDCP status report when the PDCP entity changes from a PTP sending and/or receiving mode to a PTM sending and/or receiving mode;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC Acknowledged Mode (AM) mode and/or an RLC Unacknowledged Mode (UM) mode.

5. The method of claim 4, wherein the first configuration information further comprises indication information of at least one of:
whether the PDCP status report to be sent carries information indicating a Hyper Frame Number (HFN) corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and a serial number (SN) corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

6. The method of any one of claims 1 to 5, further comprising: in case that both the PDCP entity and the RLC entity of the terminal have an Automatic Repeat reQuest (ARQ) function,
receiving, by the terminal, second configuration information sent by the first network node, and activating or deactivating, by the terminal, the ARQ function of the PDCP entity or the RLC entity based on the second configuration information.

7. The method of claim 6, further comprising:
receiving, by the terminal, third configuration information sent by the first network node, wherein the third configuration information comprises a priority of a packet discard timer, a priority of a packet retransmission timer, and a priority of a packet reorganization timer; and
performing, by the terminal, an operation mechanism corresponding to a timer with a highest priority.

8. The method of claim 6, further comprising:
determining, by the terminal, a timer with a shortest timing duration from a packet discard timer, a packet retransmission timer and a packet reorganization timer, based on an operation mechanism corresponding to the timer with the shortest timing duration.

9. A data transmission method, comprising:
receiving, by a first network node, a Packet Data Convergence Protocol (PDCP) status report sent by a terminal, and retransmitting, by the first network node, data based on the PDCP status report,
wherein the PDCP status report is sent when a first condition is met, and wherein the first condition comprises at least one of:
a PDCP entity of the terminal detecting that a first Protocol Data Unit (PDU) is missing;
the PDCP entity of the terminal detecting that a number of missing first PDUs is greater than or equal to a configured number;
the PDCP entity of the terminal undergoing modification from a Point To Point (PTP) sending and/or receiving mode to a Point To Multipoint (PTM) sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, Quality of Service (QoS) flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery.

10. The method of claim 9, further comprising:
sending, by the first network node, first configuration information to the terminal, wherein the first configuration information comprises indication information of at least one of:
the PDCP entity of the terminal detecting that the first PDU is missing, and sending the PDCP status report;
the PDCP entity of the terminal detecting that the number of missing first PDUs is greater than or equal to the configured number, and sending the PDCP status report;
the PDCP entity of the terminal undergoing modification from the PTP sending and/or receiving mode to the PTM sending and/or receiving mode, and sending the PDCP status report;
sending the PDCP status report when the PDCP entity undergoes modification of at least one of addition, removal or reconfiguration;
sending the PDCP status report when the adaptation layer entity connected to the PDCP entity of the terminal undergoes modification of at least one of addition, removal or reconfiguration;
sending the PDCP status report when the RLC entity connected or related to the PDCP entity of the terminal undergoes modification of at least one of addition, removal or reconfiguration;
sending the PDCP status report when the security configuration of the PDCP entity of the terminal changes;
sending the PDCP status report when the terminal establishes or removes connections for sending and/or receiving a same service, QoS flow, stream or service data flow, or PDU session with other terminals; or
sending the PDCP status report, corresponding to an RLC Acknowledged Mode (AM) mode and/or an RLC Unacknowledged Mode (UM) mode.

11. The method of claim 10, wherein the first configuration information further comprises indication information of at least one of:
whether the PDCP status report to be sent carries information indicating a Hyper Frame Number (HFN) corresponding to the data;
whether the PDCP status report to be sent carries information indicating an absolute time corresponding to the data;
whether the PDCP status report to be sent carries information of an absolute time when first lost data is detected;
whether the PDCP status report to be sent carries information of an HFN corresponding to indicated missing data of the first PDU;
the sent PDCP status report carrying information indicating an HFN and a serial number (SN) corresponding to the data;
whether the PDCP status report to be sent carries an indication of whether the data needs to be encrypted;
whether the PDCP status report to be sent carries an indication of whether the data needs header compression; or
whether the PDCP status report to be sent carries an indication of whether the data needs integrity protection.

12. The method of any one of claims 9 to 11, further comprising:
sending, by the first network node, second configuration information to the terminal, wherein the second configuration information is configured to activate or deactivate an Automatic Repeat reQuest (ARQ) function of the PDCP entity or the RLC entity of the terminal, and both the PDCP entity and the RLC entity of the terminal have the ARQ function.

13. The method of claim 12, further comprising:
sending, by the first network node, third configuration information to the terminal, wherein the third configuration information comprises a priority of a packet discard timer, a priority of a packet retransmission timer, and a priority of a packet reorganization timer.

14. A data transmission method, comprising:
sending and/or receiving, by a first terminal, data through m terminals, wherein m is a positive integer equal to or greater than 1.

15. The method of claim 14, further comprising:
receiving, by the first terminal, fourth configuration information sent by a core network, wherein the fourth configuration information comprises at least one of:
Protocol Data Unit (PDU) session configuration information; Internet Protocol (IP) address; Temporary Mobile Subscriber Identity (TMSI) identifier (ID); General Packet Radio Service (GPRS) Tunnel Protocol-User Plane (GTP-U) tunnel configuration information; registration area; or security parameters.

16. The method of claim 15, wherein the fourth configuration information is applied to data sending and/or receiving of at least one of the m terminals.

17. The method of claim 14, wherein the data sent and/or received by the first terminal through the m terminals and data sent and/or received by the first terminal are in at least one of the following situations:
the data sent and/or received by the first terminal through the m terminals and the data sent and/or received by the first terminal are same data of a same service;
the data sent and/or received by the first terminal through the m terminals and the data sent and/or received by the first terminal are different data of a same service; or
the data sent and/or received by the first terminal through the m terminals and the data sent and/or received by the first terminal are data of different services.

18. The method of claim 14, further comprising:
receiving, by the first terminal, fifth configuration information sent by a first network node, wherein the fifth configuration information is configured to configure data aggregation and/or splitting among a plurality of terminals,
the fifth configuration information comprises at least one of the following information:
at least one of Service Data Adaptation Protocol (SDAP) configuration information, new logic layer configuration information, Packet Data Convergence Protocol (PDCP) configuration information, Radio Link Control (RLC) configuration information, Medium Access Control (MAC) configuration information or physical layer (PHY) configuration information;
a direction in which the data aggregation and/or splitting is performed;
security information of a service corresponding to the data;
one or more Hybrid Automatic Repeat reQuest (HARQ) process numbers configured for the first terminal and each of the m terminals respectively;
one or more common Configured Grants (CGs) and/or Semi-Persistent Scheduling (SPSs) configured for the first terminal and each of the m terminals respectively;
one or more CGs and/or SPSs configured for the first terminal and each of the m terminals respectively;
one or more common Discontinuous Reception (DRX) configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, wherein k is a natural number greater than 1; or
at least one of carriers, Bandwidth Parts (BWPs) or beam resources configured for the first terminal and each of the m terminals respectively,
wherein the security information of the service corresponding to the data is in any one of the following situations:
the security information of the service corresponding to the data is applied to all of the first terminal and the m terminals; or
the security information of the service corresponding to the data comprises a plurality of configurations, and security information of the plurality of configurations are applied to the first terminal and the m terminals respectively.

19. The method of claim 18, further comprising:
forwarding, by the first terminal, all or part of the fifth configuration information to at least one of the m terminals.

20. The method of claim 18, wherein sending and/or receiving, by the first terminal, data through the m terminals comprises:
forwarding, by the first terminal, data to at least one of the m terminals according to the fifth configuration information, wherein the data is determined according to a position of a common layer,
wherein in case that the position of the common layer is a new logic layer above an SDAP or a PDCP, the data is a PDCP Service Data Unit (SDU);
in case that the position of the common layer is a PDCP, the data is a PDCP Protocol Data Unit (PDU);
in case that the position of the common layer is RLC, the data is an RLC PDU;
in case that the position of the common layer is a MAC layer, the data is a MAC PDU;
in case that the position of the common layer is a PHY, the data is a Physical Uplink Shared Channel (PUSCH) transmission.

21. The method of claim 14, wherein sending and/or receiving, by the first terminal, data through the m terminals comprises:
sending, by the first terminal, the data to at least one of the m terminals, and/or receiving, by the first terminal, data from the at least one of the m terminals, according to aggregation and/or splitting conditions sent by a first network node or an Artificial Intelligence (AI) control body; or
autonomously selecting, by the first terminal, to send the data to at least one of the m terminals, and/or receive data from the at least one of the m terminals,
wherein the aggregation and/or splitting conditions comprise at least one of the following:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters a Radio Link Failure (RLF) status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

22. The method of claim 21, further comprising:
sending, by the first terminal, first indication information to the first network node, wherein the first indication information is configured to indicate that the first terminal starts sending data to at least one of the m terminals, and/or receiving data from the at least one of the m terminals; and
sending, by the first terminal, second indication information to at least one of the m terminals, wherein the second indication information is configured to indicate that the first terminal starts sending data to the at least one of the m terminals, and/or receiving data from the at least one of the m terminals.

23. The method of claim 14, further comprising:
sending, by the first terminal, first request information to a first network node, wherein the first request information is used by the first terminal to request to send data to at least one of the m terminals, and/or receive data from the at least one of the m terminals.

24. The method of claim 18, further comprising:
exchanging first information between the first terminal and at least one of the m terminals with a data aggregation and/or splitting relationship before the data aggregation and/or splitting is established, wherein the first information comprises at least one of the following information: transmission power capability; Radio Frequency (RF) chain capability; processing capability; supported bandwidth; supported frequency combination; information of transmission delay and/or jitter among the m terminals; or information of a service supporting aggregation and/or splitting among the m terminals.

25. The method of claim 24, further comprising:
sending, by the first terminal, second information to the first network node and/or a core network, wherein the second information comprises information of the at least one of the m terminals with the data aggregation and/or splitting relationship, the information of the at least one terminal comprises at least one of the following information:
identifier (ID) of the terminal; or
the first information.

26. The method of claim 14, further comprising:
receiving, by the first terminal, a decomposition result of Quality of Service (QoS) decomposition or 5G service quality identifier (5QI) parameter decomposition performed by a first network node on a service or a QoS flow on two or more air interfaces.

27. A data transmission method, comprising:
receiving, by a second terminal, data from a first terminal, and/or sending, by the second terminal, data to the first terminal, wherein the second terminal is one of m terminals, the first terminal sends and/or receives data through the m terminals, and m is a positive integer equal to or greater than 1.

28. The method of claim 27, further comprising:
receiving, by the second terminal, fifth configuration information sent by a first network node or the first terminal, wherein the fifth configuration information is configured to configure data aggregation and/or splitting among a plurality of terminals,
the fifth configuration information comprises at least one of the following information:
at least one of Service Data Adaptation Protocol (SDAP) configuration information, new logic layer configuration information, Packet Data Convergence Protocol (PDCP) configuration information, Radio Link Control (RLC) configuration information, Medium Access Control (MAC) configuration information or physical layer (PHY) configuration information;
a direction in which the data aggregation and/or splitting is performed;
security information of a service corresponding to the data;
one or more Hybrid Automatic Repeat reQuest (HARQ) process numbers configured for the first terminal and each of the m terminals respectively;
one or more common Configured Grants (CGs) and/or Semi-Persistent Scheduling (SPSs) configured for the first terminal and each of the m terminals respectively;
one or more CGs and/or SPSs configured for the first terminal and each of the m terminals respectively;
one or more common Discontinuous Reception (DRX) configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, wherein k is a natural number greater than 1; or
at least one of carriers, Bandwidth Parts (BWPs) or beam resources configured for the first terminal and each of the m terminals respectively,
wherein the security information of the service corresponding to the data is in any one of the following situations:
the security information of the service corresponding to the data is applied to all of the first terminal and the m terminals; or
the security information of the service corresponding to the data comprises a plurality of configurations, and security information of the plurality of configurations are applied to the first terminal and the m terminals respectively.

29. The method of claim 27, wherein data transmitted between the second terminal and the first terminal and data sent and/or received by the first terminal are in at least one of the following situations:
the data transmitted between the second terminal and the first terminal and the data sent and/or received by the first terminal are same data of a same service;
the data transmitted between the second terminal and the first terminal and the data sent and/or received by the first terminal are different data of a same service; or
the data transmitted between the second terminal and the first terminal and the data sent and/or received by the first terminal are data of different services.

30. The method of claim 27, wherein data transmitted between the second terminal and the first terminal is determined according to a position of a common layer,
wherein in case that the position of the common layer is a new logic layer above a Service Data Adaptation Protocol (SDAP) or a Packet Data Convergence Protocol (PDCP), the data is a PDCP Service Data Unit (SDU);
in case that the position of the common layer is a PDCP, the data is a PDCP Protocol Data Unit (PDU);
in case that the position of the common layer is RLC, the data is an RLC PDU;
in case that the position of the common layer is Medium Access Control (MAC), the data is a MAC PDU;
in case that the position of the common layer is a physical layer (PHY), the data is a Physical Uplink Shared Channel (PUSCH) transmission.

31. The method of claim 27, further comprising:
receiving, by the second terminal, second indication information sent by the first terminal, wherein the second indication information is configured to indicate that the first terminal starts sending data to the second terminal, and/or receiving data from at least one of the m terminals.

32. A data transmission method, comprising:
sending, by a first network node, fifth configuration information or aggregation and/or splitting conditions to a first terminal and/or a second terminal, wherein the fifth configuration information and/or the aggregation and/or splitting conditions are used by the first terminal to forward data to at least one of m terminals, m is a positive integer equal to or greater than 1, and the second terminal is one of the m terminals.

33. The method of claim 32, wherein the fifth configuration information is further configured to configure data aggregation and/or splitting among a plurality of terminals,
the fifth configuration information comprises at least one of the following information:
at least one of Service Data Adaptation Protocol (SDAP) configuration information, new logic layer configuration information, Packet Data Convergence Protocol (PDCP) configuration information, Radio Link Control (RLC) configuration information, Medium Access Control (MAC) configuration information or physical layer (PHY) configuration information;
a direction in which the data aggregation and/or splitting is performed;
security information of a service corresponding to the data;
one or more Hybrid Automatic Repeat reQuest (HARQ) process numbers configured for the first terminal and each of the m terminals respectively;
one or more common Configured Grants (CGs) and/or Semi-Persistent Scheduling (SPSs) configured for the first terminal and each of the m terminals respectively;
one or more CGs and/or SPSs configured for the first terminal and each of the m terminals respectively;
one or more common Discontinuous Reception (DRX) configurations configured for the first terminal and each of the m terminals respectively;
one or more DRX configurations configured for the first terminal and each of the m terminals respectively;
HARQ redundancy version numbers configured for the first terminal and each of the m terminals respectively;
setting of a new transmission of data configured for the first terminal, and setting of a k-th retransmission of data configured for each of the m terminals respectively, wherein k is a natural number greater than 1; or
at least one of carriers, Bandwidth Parts (BWPs) or beam resources configured for the first terminal and each of the m terminals respectively,
wherein the security information of the service corresponding to the data comprises any one of the following situations:
the security information of the service corresponding to the data is applied to all of the first terminal and the m terminals; or
the security information of the service corresponding to the data comprises a plurality of configurations, and security information of the plurality of configurations are applied to the first terminal and the m terminals respectively.

34. The method of claim 32, wherein the aggregation and/or splitting conditions comprise at least one of the following situations:
transmission power of the first terminal is greater than or equal to a configured threshold;
the first terminal receives signaling for activating aggregation and/or splitting of the first network node;
the first terminal receives a paging message about a service that is aggregatable and/or splittable;
a data loss rate of the first terminal is greater than or equal to a configured threshold;
the first terminal enters a Radio Link Failure (RLF) status;
an amount of data arriving at the first terminal is greater than or equal to a configured threshold;
an amount of data in a buffer area of the first terminal is greater than or equal to a configured threshold;
a rate of a service corresponding to data of the first terminal is greater than or equal to a configured threshold;
reliability of the service corresponding to the data of the first terminal is greater than or equal to a configured threshold; or
delay of the service corresponding to the data of the first terminal is less than or equal to a configured threshold.

35. The method of claim 32, further comprising:
receiving, by the first network node, first indication information sent by the first terminal, wherein the first indication information is configured to indicate that the first terminal starts forwarding data to the at least one of the m terminals, and/or the first terminal receives data from the at least one of the m terminals.

36. The method of claim 32, further comprising:
receiving, by the first network node, first request information sent by the first terminal, wherein the first request information is used by the first terminal to request to send data to the at least one of the m terminals, and/or used by the first terminal to request to receive data from the at least one of the m terminals.

37. The method of claim 32, further comprising:
receiving, by the first network node, second information sent by the first terminal, wherein the second information comprises information of at least one of the m terminals with a data aggregation and/or splitting relationship, the information of the at least one terminal comprises at least one of the following information:
identifier (ID) of the terminal; or
the first information.

38. The method of claim 32, further comprising:
performing, by the first network node, Quality of Service (QoS) decomposition or 5G service quality identifier (5QI) parameter decomposition on a service or a QoS flow on two or more air interfaces, to obtain a decomposition result and send the decomposition result to the first terminal.

39. A data transmission apparatus, applied to a terminal, comprising: a first communication unit, configured to send a Packet Data Convergence Protocol (PDCP) status report by a PDCP entity when a first condition is met, wherein the first condition comprises at least one of:
the PDCP entity detecting that a first Protocol Data Unit (PDU) is missing;
the PDCP entity detecting that a number of missing first PDUs is greater than or equal to a configured number;
the PDCP entity undergoing modification from a Point To Point (PTP) sending and/or receiving mode to a Point To Multipoint (PTM) sending and/or receiving mode;
a PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, Quality of Service (QoS) flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery,
wherein the PDCP status report is configured to trigger a first network node to retransmit data.

40. A data transmission apparatus, applied to a first network node, comprising: a second communication unit, configured to receive a Packet Data Convergence Protocol (PDCP) status report sent by a terminal, and retransmit data based on the PDCP status report,
wherein the PDCP status report is sent when a first condition is met, and wherein the first condition comprises at least one of:
a PDCP entity of the terminal detecting that a first Protocol Data Unit (PDU) is missing;
the PDCP entity of the terminal detecting that a number of missing first PDUs is greater than or equal to a configured number;
the PDCP entity of the terminal undergoing modification from a Point To Point (PTP) sending and/or receiving mode to a Point To Multipoint (PTM) sending and/or receiving mode;
the PDCP entity of the terminal undergoing modification of at least one of addition, removal or reconfiguration;
an adaptation layer entity connected to the PDCP entity of the terminal, undergoing modification of at least one of addition, removal or reconfiguration;
a Radio Link Control (RLC) entity connected or related to the PDCP entity of the terminal, undergoing modification of at least one of addition, removal or reconfiguration;
security configuration of the PDCP entity of the terminal undergoing modification;
the terminal establishing or removing connections for sending and/or receiving a same service, Quality of Service (QoS) flow, stream or service data flow, or PDU session with other terminals;
the terminal re-entering a coverage area from a non-coverage area;
a radio condition of a service cell measured by the terminal being equal to or greater than a configured threshold; or
the terminal completing Radio Link Failure (RLF) recovery.

41. A data transmission apparatus, applied to a first terminal, comprising: a third communication unit, configured to send and/or receive data through m terminals, wherein m is a positive integer equal to or greater than 1.

42. A data transmission apparatus, applied to a second terminal, comprising: a fourth communication unit, configured to receive data from a first terminal, and/or send data to the first terminal, wherein the second terminal is one of m terminals, the first terminal sends and/or receives data through the m terminals.

43. A data transmission apparatus, applied to a first network node, comprising: a fifth communication unit, configured to send fifth configuration information or aggregation and/or splitting conditions to a first terminal and/or a second terminal, wherein the fifth configuration information and/or the aggregation and/or splitting conditions are used by the first terminal to forward data to at least one of m terminals, m is a positive integer equal to or greater than 1, and the second terminal is one of the m terminals.

44. A computer-readable storage medium, having stored thereon a computer program, the program implementing steps of the method of any one of claims 1 to 8 when the program is executed by a processor; or
the program implementing steps of the method of any one of claims 9 to 13 when the program is executed by the processor; or
the program implementing steps of the method of any one of claims 14 to 26 when the program is executed by the processor; or
the program implementing steps of the method of any one of claims 27 to 31 when the program is executed by the processor; or
the program implementing steps of the method of any one of claims 32 to 38 when the program is executed by the processor.

45. A communication device, comprising a memory, a processor, and a computer program stored on the memory and executable on the processor, the processor implementing steps of the method of any one of claims 1 to 8 when the processor executes the program; or
the processor implementing steps of the method of any one of claims 9 to 13 when the processor executes the program; or
the processor implementing steps of the method of any one of claims 14 to 26 when the processor executes the program; or
the processor implementing steps of the method of any one of claims 27 to 31 when the processor executes the program; or
the processor implementing steps of the method of any one of claims 32 to 38 when the processor executes the program.
